# EUROPEAN PATENT APPLICATION

(11) **EP 4 560 659 A2**
(43) Date of publication of application: **28.05.2025**
(21) Application number: 24207500.0
(22) Date of filing: 18.10.2024
(51) Int. Cl.: H01G 4/005, H01G 4/232, H01G 4/12, H01G 4/30, H01G 4/012

(54) **MULTILAYER ELECTRONIC COMPONENT**

(30) Priority: 21.11.2023 KR 20230162545; 15.02.2024 KR 20240021899
(71) Applicant: Samsung Electro-Mechanics Co., Ltd., Suwon-si, Gyeonggi-do (KR)
(72) Inventor: Jun, Ho in, Suwon-si, Gyeonggi-do (KR); Kwon, Seong Min, Suwon-si, Gyeonggi-do (KR)
(74) Representative: Grünecker Patent- und Rechtsanwälte PartG mbB

(57) **Abstract**

A multilayer electronic component includes a body including a dielectric layer and first and second internal electrodes disposed alternately in a first direction with the dielectric layer therebetween; first and second external electrodes disposed on the body and connected to the first and second internal electrodes, respectively; a first via electrode penetrating the dielectric layer and connecting two first internal electrodes adjacent to each other in the first direction; and a second via electrode penetrating the dielectric layer and connecting two second internal electrodes adjacent to each other in the first direction, wherein the two first via electrodes adjacent to each other in the first direction are shifted from each other, and the two second via electrodes adjacent to each other in the first direction are shifted from each other.

## Description

### CROSS-REFERENCE TO RELATED APPLICATION(S)

This application claims the benefit of priority to Korean Patent Application No. 10-2024-0021899 filed on February 15, 2024 and Korean Patent Application No. 10-2023-0162545 filed on November 21, 2023 in the Korean Intellectual Property Office, the disclosures of which are incorporated herein by reference in their entirety.

### TECHNICAL FIELD

The present disclosure relates to a multilayer electronic component and a method of manufacturing the same.

### BACKGROUND

A multilayer electronic component (MLCC), a multilayer electronic component, may be a chip condenser mounted on printed circuit boards of various electronic products including image display devices such as a liquid crystal display (LCD) and a plasma display panel (PDP), a computer, a smartphone, a mobile phone, or the like, and charging or discharging electricity therein or therefrom. Such a multilayer ceramic capacitor has been used as a component of various electronic devices since a multilayer ceramic capacitor may have a small size and high capacitance and may be easily mounted.

An MLCC generally may include a body including a plurality of internal electrodes disposed alternately with dielectric layers, and an external electrode disposed externally of the body and connected to the plurality of internal electrodes.

During a sintering process to manufacture an MLCC, an internal electrode may shrinkage or cracks may be formed in a body, such that connection between the internal electrode and the external electrode may be broken, which reduce capacitance of the MLCC.

### SUMMARY

An embodiment is to provide a multilayer electronic component having excellent mechanical strength and electrical properties.

According to an embodiment, a multilayer electronic component includes a body including a dielectric layer and first and second internal electrodes disposed alternately in a first direction with the dielectric layer therebetween, and including a first surface and a second surface opposing each other in the first direction, a third surface and a fourth surface connected to the first surface and the second surface and opposing each other in a second direction, and a fifth surface and a sixth surface connected to the first surface to the fourth surface and opposing each other in a third direction; first and second external electrodes disposed on the body and connected to the first and second internal electrodes, respectively; a first via electrode penetrating the dielectric layer and connecting two first internal electrodes adjacent to each other in the first direction; and a second via electrode penetrating the dielectric layer and connecting two second internal electrodes adjacent to each other in the first direction, wherein the two first via electrodes adjacent to each other in the first direction are shifted from each other, and the two second via electrodes adjacent to each other in the first direction are shifted from each other.

According to an embodiment, a multilayer electronic component includes a body including a first surface and a second surface opposing each other in a first direction, a third surface and a fourth surface connected to the first surface and the second surface and opposing each other in a second direction, and a fifth surface and a sixth surface connected to the first surface to the fourth surface and opposing each other in a third direction, and including a first internal electrode layer including a first dielectric layer, and a first internal electrode and a first auxiliary electrode spaced apart from each other in the second direction on the first dielectric layer, and a second internal electrode layer including a second dielectric layer, and a second internal electrode and a second auxiliary electrode spaced apart from each other in the second direction on the second dielectric layer, wherein the first internal electrode layer and the second internal electrode layer are disposed alternately in the first direction; first and second external electrodes disposed on the body and connected to the first and second internal electrodes, respectively; a first via electrode penetrating the first dielectric layer and connecting the first internal electrode to the second auxiliary electrode; a second via electrode penetrating the first dielectric layer and connecting the first auxiliary electrode to the second internal electrode; a third via electrode penetrating the second dielectric layer and connecting the second auxiliary electrode to the first internal electrode; and a fourth via electrode penetrating the second dielectric layer and connecting the second internal electrode to the first auxiliary electrode, wherein the first via electrode is shifted from the third via electrode adjacent to each other in the first direction, and the second via electrode is shifted from the fourth via electrode adjacent to each other in the first direction.

According to an embodiment, a method of manufacturing a multilayer electronic component includes forming a via in a dielectric sheet continuously supplied; filling electrode paste into the via; printing an internal electrode pattern connected to the via on the dielectric sheet; forming a laminate by laminating the dielectric sheet on which the internal electrode pattern is printed; obtaining a unit laminate by cutting the laminate; obtaining a body by sintering the unit laminate; and forming an external electrode on the body.

### BRIEF DESCRIPTION OF DRAWINGS

The above and other aspects, features, and advantages in the embodiments will be more clearly understood from the following detailed description, taken in combination with the accompanying drawings, in which:
FIG. 1 is a perspective diagram illustrating a multilayer electronic component according to an embodiment;
FIG. 2 is a cross-sectional diagram illustrating a cross-sectional surface, taken along line I-I' in FIG. 1;
FIG. 3 is a cross-sectional diagram illustrating a cross-sectional surface, taken along line II-II' in FIG. 2;
FIG. 4 is a cross-sectional diagram illustrating a cross-sectional surface, taken along line III-III' in FIG. 2;
FIG. 5 is a cross-sectional diagram illustrating a cross-sectional surface, taken along line IV-IV' in FIG. 3;
FIG. 6 is a cross-sectional diagram illustrating a cross-sectional surface, taken along line V-V';
FIGS. 7A to 7C are enlarged cross-sectional diagrams illustrating the portion in FIG. 2;
FIG. 8 is a perspective diagram illustrating a multilayer electronic component according to a first modified example of a first embodiment;
FIG. 9 is a cross-sectional diagram illustrating a cross-sectional surface, taken along line VI-VI' in FIG. 8;
FIG. 10 is a cross-sectional diagram illustrating a cross-sectional surface, taken along line VII-VII' in FIG. 9;
FIG. 11 is a perspective diagram illustrating a multilayer electronic component according to a second modified example of a first embodiment;
FIG. 12 is a cross-sectional diagram illustrating a cross-sectional surface, taken along line VIII-VIII' in FIG. 11;
FIG. 13 is a cross-sectional diagram illustrating a cross-sectional surface, taken along line IX-IX' in FIG. 12;
FIG. 14 is a perspective diagram illustrating a multilayer electronic component according to a third modified example of a first embodiment;
FIG. 15 is a cross-sectional diagram illustrating a cross-sectional surface, taken along line X-X' in FIG. 14;
FIG. 16 is a cross-sectional diagram illustrating a cross-sectional surface, taken along line XI-XI' in FIG. 15;
FIG. 17 is a perspective diagram illustrating a multilayer electronic component according to a fourth modified example of a first embodiment;
FIG. 18 is a cross-sectional diagram illustrating a cross-sectional surface, taken along line XII-XII' in FIG. 17;
FIG. 19 is a cross-sectional diagram illustrating a cross-sectional surface, taken along line XIII-XIII' in FIG. 18;
FIG. 20 is a perspective diagram illustrating a multilayer electronic component according to a second embodiment;
FIG. 21 is an exploded perspective diagram illustrating a multilayer electronic component according to a second embodiment;
FIG. 22 is a cross-sectional diagram illustrating a cross-sectional surface, taken along line XIV-XIV' in FIG. 20;
FIG. 23 is a cross-sectional diagram illustrating a cross-sectional surface, taken along line XV-XV' in FIG. 22;
FIG. 24 is a plan diagram illustrating a first internal electrode layer of a multilayer electronic component according to a second embodiment;
FIG. 25 is a plan diagram illustrating a second internal electrode layer of a multilayer electronic component according to a second embodiment;
FIG. 26 is a perspective diagram illustrating a multilayer electronic component according to a first modified example of a second embodiment;
FIG. 27 is a cross-sectional diagram illustrating a cross-sectional surface, taken along line XVI-XVI' in FIG. 26;
FIG. 28 is a cross-sectional diagram illustrating a cross-sectional surface, taken along line XVII-XVII' in FIG. 27;
FIG. 29 is a perspective diagram illustrating a multilayer electronic component according to a second modified example of a second embodiment;
FIG. 30 is a cross-sectional diagram illustrating a cross-sectional surface, taken along line XVIII-XVIII' in FIG. 29;
FIG. 31 is a cross-sectional diagram illustrating a cross-sectional surface, taken along line XIX-XIX' in FIG. 30;
FIG. 32 is a perspective diagram illustrating a multilayer electronic component according to a third modified example of a second embodiment;
FIG. 33 is a cross-sectional diagram illustrating a cross-sectional surface, taken along line XX-XX' in FIG. 30;
FIG. 34 is a cross-sectional diagram illustrating a cross-sectional surface, taken along line XXI-XXI' in FIG. 30;
FIG. 35 is a cross-sectional diagram illustrating a charging and printing process for manufacturing a multilayer electronic component according to first or second embodiments in the embodiments;
FIGS. 36 to 38 are cross-sectional diagrams illustrating the modified example in FIG. 35;
FIG. 39 is a cross-sectional diagram illustrating a process of forming a laminate for manufacturing a multilayer electronic component according to a first embodiment; and
FIG. 40 is a cross-sectional diagram illustrating a process of forming a laminate for manufacturing a multilayer electronic component according to a second embodiment.

### DETAILED DESCRIPTION

Hereinafter, embodiments in the embodiments will be described as below with reference to the accompanying drawings.

These embodiments are described in sufficient detail to enable those skilled in the art to practice the invention. It may be understood that the various embodiments of the invention, although different, are not necessarily mutually exclusive. For example, structures, shapes, and sizes described as examples in embodiments in the present disclosure may be implemented in another embodiment without departing from the spirit and scope in the embodiments. Further, modifications of positions or arrangements of elements in embodiments may be made without departing from the spirit and scope in the embodiments. The following detailed description is, accordingly, not to be taken in a limiting sense, and the scope of the present invention are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist in the embodiments obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### First embodiment

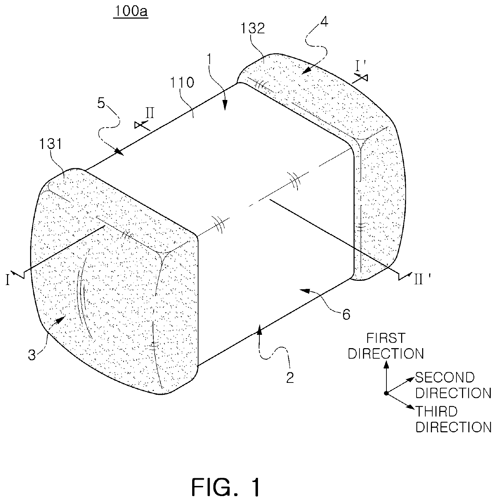

FIG. 1 is a perspective diagram illustrating a multilayer electronic component according to an embodiment.

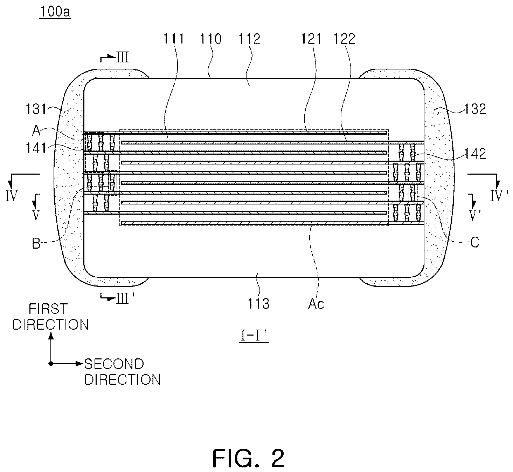

FIG. 2 is a cross-sectional diagram illustrating a cross-sectional surface, taken along line I-I' in FIG. 1.

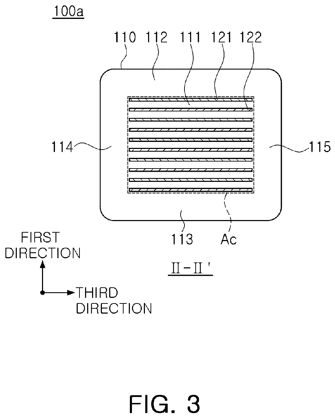

FIG. 3 is a cross-sectional diagram illustrating a cross-sectional surface, taken along line II-II' in FIG. 2.

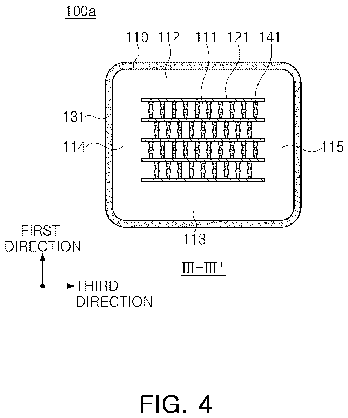

FIG. 4 is a cross-sectional diagram illustrating a cross-sectional surface, taken along line III-III' in FIG. 2.

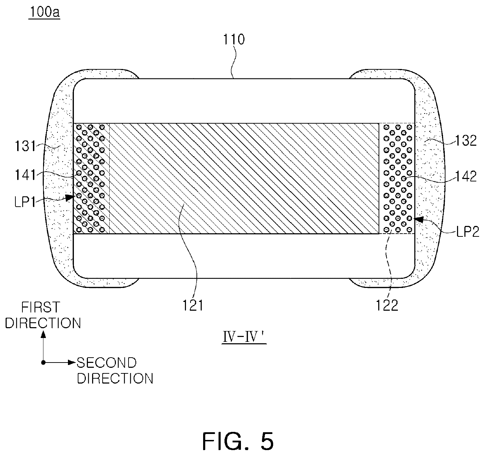

FIG. 5 is a cross-sectional diagram illustrating a cross-sectional surface, taken along line IV-IV' in FIG. 3.

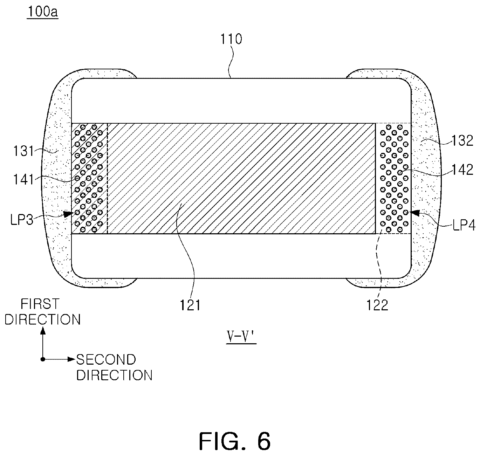

FIG. 6 is a cross-sectional diagram illustrating a cross-sectional surface, taken along line V-V'.

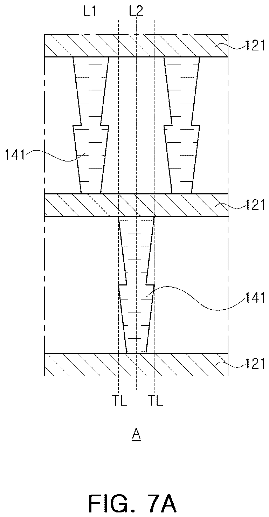

FIGS. 7A to 7C are enlarged cross-sectional diagrams illustrating the portion in FIG. 2.

Hereinafter, the multilayer electronic component 100a according to the first embodiment will be described in greater detail. Also, a multilayer ceramic capacitor will be described as an example of a multilayer electronic component, but an embodiment thereof is not limited thereto and may also be applied to various multilayer electronic components, such as an inductor, a piezoelectric element, a varistor, or a thermistor.

A size of the multilayer electronic component 100a is not limited to any particular example. However, the dimension (L size) of the multilayer electronic component 100a in the second direction may be, for example, 0.2 mm to 3.2 mm, the dimension (W size) of the multilayer electronic component 100a in the third direction may be, for example, 0.1mm to 2.5mm, and the dimension (T size) of the multilayer electronic component 100a in the first direction may be, for example, 0.05mm to 2.5mm.

The multilayer electronic component 100a according to the first embodiment may include a body 110 including a dielectric layer 111 and internal electrodes 121 and 122, external electrodes 131 and 132 and via electrodes 141 and 142.

The shape of the body 110 may not be limited to any particular shape, but as illustrated, the body 110 may have a hexahedral shape or a shape similar to a hexahedral shape. Due to reduction of ceramic powder included in the body 110 during a sintering process or polishing of corners, the body 110 may not have an exactly hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first to fourth surfaces 1, 2, 3, and 4, and opposing each other in the third direction.

The body 110 may include the dielectric layer 111 and the first and second internal electrodes 121 and 122 disposed alternately in the first direction with the dielectric layer 111 therebetween. The plurality of dielectric layers 111 forming the body 110 may be in a sintered state, and boundaries between adjacent dielectric layers 111 may be integrated with each other such that the boundaries therebetween may not be distinct without using a scanning electron microscope (SEM).

For example, the dielectric layer 111 may include a perovskite-type compound represented as ABO₃ as a main component. The perovskite compound represented as ABO₃ may be, for example, BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), CaZrO₃, or (Ca₁₋ₓSrₓ)(Zr_{1-y}Ti_{y})O₃ (0<x≤0.5, 0<y≤0.5).

An average thickness of the dielectric layer 111 is not limited to any particular example. The average thickness of the dielectric layer 111 may be, for example, 0.1 um to 10 um, 0.1 um to 5 um, 0.1 um to 2 um, or 0.1 um to 0.4 µm.

The body 110 may include a first internal electrode 121 and a second internal electrode 122 disposed alternately in the first direction with the dielectric layer 111 interposed therebetween. That is, the first internal electrode 121 and the second internal electrode 122, a pair of electrodes having different polarities, may be disposed to oppose each other with the dielectric layer 111 therebetween. The first internal electrode 121 and the second internal electrode 122 may be electrically isolated from each other by the dielectric layer 111 disposed therebetween.

The first internal electrode 121 may be spaced apart from the fourth surface 4 and may be connected to the first external electrode 131 on the third surface 3. The second internal electrode 122 may be spaced apart from the third surface 3 and may be connected to the second external electrode 132 on the fourth surface 4.

A metal included in the internal electrodes 121 and 122 may be one or more of Ni, Cu, Pd, Ag, Au, Pt, Sn, W, Ti and alloys thereof, and may include Ni more preferably, but an embodiment thereof is not limited thereto.

An average thickness of the internal electrodes 121 and 122 is not limited to any particular example. The average thickness of the internal electrodes 121 and 122 may be, for example, 0.1 um to 3.0 um, 0.1 um to 1.0 um, or 0.1 um to 0.4 µm.

An average thickness of the dielectric layer 111 and an average thickness of the internal electrodes 121 and 122 may indicate average dimensions of the dielectric layer 111 and the internal electrodes 121 and 122 in the first direction, respectively. The average thickness of dielectric layer 111 and the average thickness of the internal electrodes 121 and 122 may be measured by scanning a cross-section of the body 110 in the first and second direction using a scanning electron microscope (SEM) at 10,000 magnification. More specifically, the average thickness of the dielectric layer 111 may be measured by measuring the thicknesses at multiple points of the dielectric layer 111, for example, 30 points at an equal distance in the second direction, and obtaining the average value. Also, the average thickness of the internal electrodes 121 and 122 may be measured by measuring the thicknesses at multiple points of the internal electrodes 121 and 122, for example, 30 points at an equal distance in the second direction, and obtaining the average value. The 30 points at an equal distance may be specified in the capacitance formation portion Ac. The average thicknesses of the dielectric layer 111 and the average thickness of the internal electrodes 121 and 122 may be further generalized by measuring the average values of 10 dielectric layers 111 and 10 internal electrodes 121 and 122, respectively.

The body 110 may include a capacitance formation portion Ac disposed in the body 110, and in which the first and second internal electrodes 121 and 122 are disposed alternately in the first direction with the dielectric layer 111 interposed therebetween, and cover portions 112 and 113 disposed on both surfaces of the capacitance formation portion Ac opposing each other in the first direction. The cover portions 112 and 113 may have a configuration similar to those of the dielectric layer 111 other than the configuration in which the cover portions 112 and 113 do not include an internal electrode.

The average thickness of the cover portions 112 and 113 is not limited to any particular example. The average thickness of the cover portions 112 and 113 may be, for example, 40 um or less, 30 um or less, or 20 um or less. The average thickness of the cover portions 112 and 113 may be, for example, 5 um or more, or 10 um or more. Here, the average thickness of cover portions 112 and 113 may indicate the average thickness of each of the first cover portions 112 and the second cover portions 113.

The average thickness of the cover portions 112 and 113 may indicate the average dimension of the cover portions 112 and 113 in the first direction, and may be an average value of the dimensions of the cover portions 112 and 113 in the first direction, measured at 5 points at an equal distance in the second direction.

The body 110 may include margin portions 114 and 115 disposed on both surfaces of the capacitance formation portion Ac opposing each other in the third direction. In other words, the margin portions 114 and 115 may indicate a region between both ends of the internal electrodes 121 and 122 and a boundary surface of the body 110 in a cross-section of the body 110 in the first and third directions. The margin portions 114 and 115 may have a configuration similar to that of the dielectric layer 111 other than the configuration in which the margin portions 114 and 115 do not include the internal electrodes 121 and 122.

The average thickness of the margin portions 114 and 115 is not limited to any particular example. The average thickness of the margin portions 114 and 115 may be, for example, 40 um or less, 20 um or less, or 15 um or less. The average thickness of the margin portions 114 and 115 may be, for example, 2 um or more, or 10 um or more. Here, the average thickness of the margin portions 114 and 115 may indicate each of the average thicknesses of the first margin portion 114 and the second margin portion 115.

The average thickness of the margin portions 114 and 115 may indicate the average dimension of the margin portions 114 and 115 in the third direction, and may be an average value of the dimension of margin portions 114 and 115 in the third direction measured at 5 points at an equal distance in the first direction in a cross-section, in the first and third direction, of a center of the body 110 in the second direction.

The first external electrode 131 and the second external electrode 132 may be disposed on the body 110 and may be connected to the first internal electrode 121 and the second internal electrodes 121 and 122, respectively. The first external electrode 131 may be disposed on the third surface 3 and may extend to a portion of the first surface and second surfaces 1 and 2, and the second external electrode 132 may be disposed on the fourth surface 4 and may extend to a portion of the first and second surfaces 1 and/or 2. The first and second external electrodes 131 and 132 may also extend to a portion of the fifth and sixth surfaces 5 and/or 6.

The types of the external electrodes 131 and 132 are not limited to any particular example, and may have a multilayer structure. The external electrodes 131 and 132 may include, for example, a base electrode layer in contact with the internal electrodes 121 and 122 and a plating layer disposed on the base electrode layer. The base electrode layer may include, for example, one or more of a sintered electrode layer, a conductive resin layer, and a thin film electrode layer.

The sintered electrode layer may include metal and glass. The metal included in the sintered electrode layer may include one or more of Cu, Ni, Pd, Pt, Au, Ag, Pb and alloys thereof, but an embodiment thereof is not limited thereto. The glass included in the sintered electrode layer may include one or more oxides among Ba, Ca, Zn, Al, B and Si, but an embodiment thereof is not limited thereto.

The conductive resin layer may include metal particles and resin. Metal particles included in the conductive resin layer may include one or more of sphere-type particles and flake-type particles. Here, the sphere-type particle may also include a shape which is not an exact spherical shape, for example, a shape in which a length ratio (major axis/minor axis) of the major axis and the minor axis is 1.45 or less. A flake-type particle may indicate a particle having a flat and elongated shape. For example, the length ratio (major axis/minor axis) of the major axis and the minor axis may be 1.95 or more. Metal particles included in the conductive resin layer may include, for example, one or more of Cu, Ni, Pd, Pt, Au, Ag, Pb, Sn and alloys thereof. Resin included in the conductive resin layer may include, for example, one or more of epoxy resin, acrylic resin, and ethyl cellulose.

For example, the conductive resin layer may be formed of conductive polymer. The conductive polymer may include, for example, one or more of polypyrrole, polyaniline, polythiophene, and PEDOT:PSS.

For example, the thin film electrode layer may be formed using an electrolytic plating method, an electroless plating method, an atomic layer deposition (ALD) method, a chemical vapor deposition (CVD) method, and/or a sputtering method, or the like.

For example, the base electrode layer may be the sintered electrode layer, or may have a structure in which the sintered electrode layer and the conductive resin layer are laminated in order, or may have a structure in which the thin film electrode layer and the sintering electrode layer are laminated in order.

The plating layer may improve mounting properties. The plating layer may include, for example, Ni, Sn, Pd, and/or alloys thereof, and may be formed in a plurality of layers. The plating layer may be, for example, a Ni plating layer or a Sn plating layer, or may be a Ni plating layer and a Sn plating layer formed in order. Also, the plating layer may include a plurality of Ni plating layers and/or a plurality of Sn plating layers.

In the drawing, the multilayer electronic component 100a may have two external electrodes 131 and 132, but an embodiment thereof is not limited thereto, and the number of the external electrodes 131 and 132 or the shape thereof may be varied depending on the shape of the internal electrodes 121 and 122 or other purposes.

The multilayer electronic component 100a according to the first embodiment may include the first via electrode 141 penetrating the dielectric layer 111 and connecting the two first internal electrodes 121 adjacent to each other in the first direction, and a second via electrode 142 penetrating the dielectric layer 111 and connecting the two second internal electrodes 122 adjacent in the first direction. The first via electrode 141 may connect first internal electrodes adjacent to each other among the plurality of first internal electrodes 121, and the second via electrode 142 may connect second internal electrodes adjacent to each other among the plurality of second internal electrodes 122.

For example, the first via electrode 141 may penetrate the region adjacent to the third surface 3 of the dielectric layer 111. The first via electrode 141 may penetrate the region (hereinafter, referred to as the first margin region) in which the third surface 3 and the second internal electrode 122 are spaced apart from each other in the second direction.

For example, the second via electrode 142 may penetrate the region adjacent to the fourth surface 4 of the dielectric layer 111. The second via electrode 142 may penetrate the region (hereinafter, referred to as the second margin region) in which the fourth surface 4 and the first internal electrode 121 are spaced apart from each other in the second direction.

Generally, the issues in which connection between the internal electrode and the external electrode is broken due to shrinkage of the internal electrode during the sintering process or cracks formed in the body can occur in related multilayer electronic components. Among the plurality of internal electrodes, as the number of internal electrodes disconnected from external electrodes increases, capacitance of the multilayer electronic component may decrease.

In the first embodiment, even when a portion of the internal electrodes 121 and 122 is reduced by the sintering process and contact with the external electrodes 131 and 132 is broken on the third surface 3 or the fourth surface 4, the internal electrode may be electrically connected to the external electrodes 131 and 132 through the via electrodes 141 and 142 and the internal electrodes 121 and 122 of the other layers. Accordingly, deterioration of capacitance of the multilayer electronic component 100a may be prevented.

According to the first embodiment, the two first via electrodes 141 adjacent to each other in the first direction may be shifted from each other, and the two second via electrodes 142 adjacent to each other in the first direction may be shifted from each other. Here, two via electrodes adjacent to each other in the first direction may indicate a via electrode in contact with an upper surface of the same internal electrode, and another via electrode in contact with a lower surface of the same internal electrode in a cross-section of the body in the first direction and the second direction or a cross-section of the body in the first direction and the third direction. Also, when a plurality of via electrodes in contact with the upper surface and the lower surface are present, the two via electrodes adjacent to each other in the first direction may indicate a via electrode in contact with the upper surface of the same internal electrode, another via electrode the most adjacent to the via electrode in contact with the lower surface of the same internal electrode among the plurality of via electrodes in the second or third direction.

Referring to FIG. 7A, the configuration in which the two via electrodes 141 adjacent to each other in the first direction are shifted from each other may indicate that, for example, in the cross-section of the body 110 in the first and second directions, a conceptual line L1 connecting points at 1/2 widths of the upper surface and lower surface in contact with the two internal electrodes 121 of the via electrode 141, adjacent to each other, respectively, and a conceptual line L2 connecting points at 1/2 widths of the upper surface and the lower surface in contact with the two internal electrodes 121 of the other via electrode 141, adjacent to each other, respectively, do not match each other.

As the two via electrodes 141 adjacent to each other in the first direction are shifted from each other, the via electrodes 141 may be distributed in the margin region. Accordingly, the via electrodes 141 may effectively support the margin region. That is, the recess of the margin region due to a step difference by a difference in the number of laminations of the internal electrodes 121 and 122 between the margin region and the capacitance formation portion Ac, a difference in density between the region in which the via electrodes 141 are disposed in the margin region and the region in which the via electrodes 141 are not disposed, or external stress may be prevented. Same description is applicable to via electrodes 142.

In an embodiment, the two first via electrodes 141 adjacent to each other in the first direction may not overlap each other in the first direction, and the two second via electrodes 142 adjacent to each other in the first direction may not overlap each other in the first direction.

When the two via electrodes 141 adjacent to each other in the first direction are shifted from each other in the first direction, the effect of improvement of mechanical strength of the multilayer electronic component 100a in the embodiments may be obtained, but when the two via electrodes 141 do not overlap each other in the first direction, the effect of improvement of mechanical strength in the embodiments may be prominent. Same description is applicable to via electrodes 142.

Referring to FIG. 7A, the configuration in which two via electrodes adjacent to each other in the first direction do not overlap each other in the first direction may indicate that the conceptual line TL in the first direction, in contact with one via electrode at the point at which a width of the one via electrode is maximum does not intersect with the other via electrode.

In an embodiment, a plurality of each of the first and second via electrodes 141 and 142 penetrating the same dielectric layer 111 may be disposed. The plurality of each of the first and second via electrodes 141 and 142 penetrating the same dielectric layer 111 may be arranged, for example, in the second and third directions.

Referring to FIGS. 5 and 6, the plurality of first via electrodes 141 penetrating the same dielectric layer 111 may be shifted from each other with respect to the second and third directions, thereby forming a first grid pattern LP1 or a third grid pattern LP3.

The first and third grid patterns LP1 and LP3 may be disposed alternately in the body 110 with the first internal electrode 121 interposed therebetween. The first and third grid patterns LP1 and LP3 may not overlap each other in the first direction. That is, the first and third grid patterns LP1 and LP3, including a plurality of first via electrodes 141 arranged in a zigzag pattern, respectively, may not overlap each other in the first direction, such that the effect of improvement of mechanical strength in the embodiments may be prominent.

Similarly, the plurality of second via electrodes 142 penetrating the same dielectric layer 111 may be shifted from each other with respect to the second and third directions, thereby forming a second grid pattern LP2 or a fourth grid pattern LP4.

The second and fourth grid patterns LP2 and LP4 may be disposed alternately in the body 110 with the second internal electrode 122 interposed therebetween. The second and fourth grid patterns LP2 and LP4 may not overlap each other in the first direction. That is, the second and fourth grid patterns LP2 and LP4, including a plurality of second via electrodes 142 arranged in a zigzag pattern, respectively, may not overlap each other in the first direction, such that the effect of improvement of mechanical strength in the embodiments may be prominent.

The number of the via electrodes 141 and 142 forming one of grid patterns LP1, LP2, LP3 and LP4 is not limited to any particular example and may be varied depending on the size of the multilayer electronic component 100a or the size of via electrodes 141 and 142, or the like. For example, the number of the via electrodes 141 and 142 forming one of the grid patterns LP1, LP2, LP3, and LP4 may be 5 to 1000.

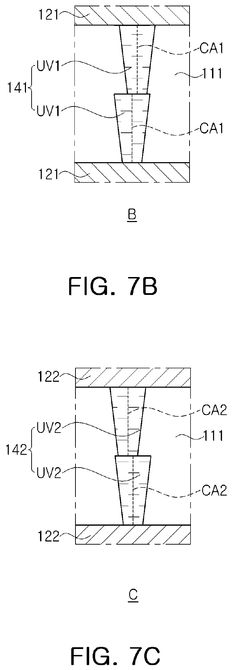

Referring to FIGS. 7B and 7C, in an embodiment, in the first via electrode 141, the plurality of first unit vias UV1 may be laminated in the first direction, and in the second via electrode 142, the plurality of second unit vias UV2 may be laminated in the first direction. For example, the via electrodes 141 and 142 may be formed by laminating a plurality of dielectric sheets in which vias are formed, and accordingly, the via electrodes 141 and 142 may have a structure in which the plurality of unit vias UV1 and UV2 are laminated in the first direction.

For example, the via electrodes 141 and 142 may be formed by laminating a plurality of dielectric sheets in which vias are formed, such that the laminated plurality of unit vias UV1 and UV2 may not be perfectly aligned with each other. Accordingly, a central axis CA1 of each of the plurality of laminated first unit vias UV1 may not match each other, and a central axis CA2 of each of the plurality of laminated second unit vias UV2 may not match each other. However, an embodiment thereof is not limited thereto, and the central axes CA1 of each of the plurality of first unit vias may match each other, and the central axes CA2 of each of the plurality of second unit vias UV2 may match each other.

In an embodiment, a width of an upper surface of the first unit via UV1 may be greater than a width of a lower surface of the first unit via UV1, and a width of an upper surface of the second unit via UV2 may be greater than a width of a lower surface of the second unit via UV2.

As will be described later, a via formed in a dielectric sheet may be formed, for example, by irradiating a laser to the dielectric sheet. In this case, the amount of energy of laser beam may decrease from one surface of the dielectric sheet where the laser beam is irradiated to the other surface. Accordingly, the width of the first unit via UV1 may gradually decrease from the upper surface of the first unit via UV1 toward the lower surface of first unit via UV1, and the width of the second unit via UV2 may gradually decrease from the upper surface of the second unit via UV2 to the lower surface of the second unit via UV2.

However, an embodiment thereof is not limited thereto, and by controlling the irradiation conditions of laser beam, the cross-section of the unit via UV1, UV2 may have various shapes, including a trapezoidal shape, and side walls of the unit via UV1, UV2 may be curved.

A maximum width of each of the unit via UV1 and UV2 may be varied depending on the size of the multilayer electronic component 100a or the thickness of the dielectric layer 111. The maximum width of each of the unit via UV1 and UV2 is not limited to any particular example, and may be, for example, 0.03 um to 3.0 um.

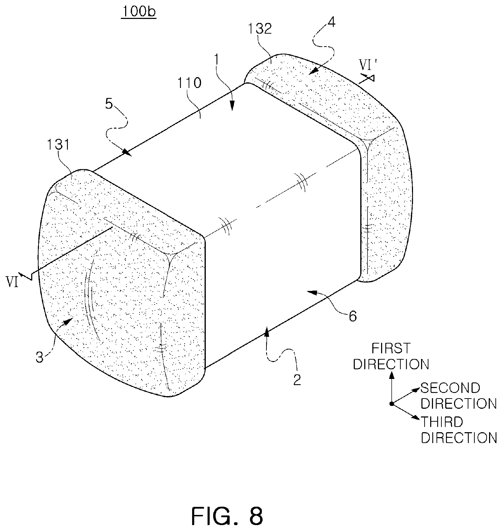

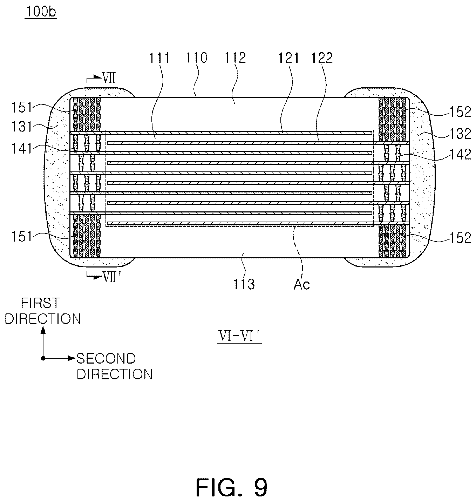

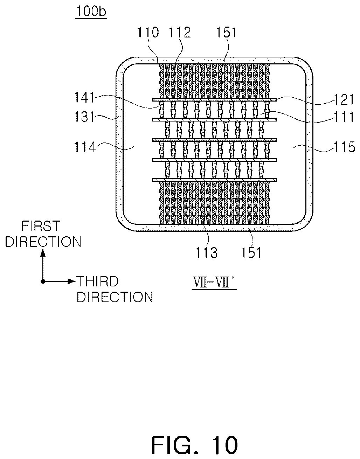

FIG. 8 is a perspective diagram illustrating a multilayer electronic component according to a first modified example of a first embodiment. FIG. 9 is a cross-sectional diagram illustrating a cross-sectional surface, taken along line VI-VI' in FIG. 8. FIG. 10 is a cross-sectional diagram illustrating a cross-sectional surface, taken along line VII-VII' in FIG. 9.

Hereinafter, a multilayer electronic component 100b according to a first modified example of the first embodiment may be described with reference to FIGS. 8 to 10. The same/similar reference numerals may be used for components same/similar to the components of the multilayer electronic component 100a described with reference to FIGS. 1 to 7C, and overlapping descriptions may not be provided.

The multilayer electronic component 100b may include a first connection electrode 151 penetrating the cover portions 112 and 113 and connecting the first internal electrode 121 disposed in an outermost region in the first direction to the first external electrode 131, in particular to the portion of the first external electrode disposed on the first and second surfaces (also referred to herein as the band portion). A second connection electrode 152 penetrating the cover portions 112 and 113 and connecting the second internal electrode 122 disposed in an outermost region in the first direction to the second external electrode 132, in particular to the portion of the second external electrode disposed on the first and second surfaces. Both the first and second connection electrodes 151 and 152 may be disposed in the first cover portions 112 and the second cover portions 113.

The connection electrodes 151 and 152 may be formed, for example, by laminating two or more layers of a sheet for forming a cover portion on which vias are formed. Accordingly, the connection electrodes 151 and 152 may have a plurality of unit vias laminated in the first direction. The number of the unit vias forming the connection electrodes 151 and 152 is not limited to any particular example and may be varied depending on the number of sheets for forming a cover portion.

The number of the connection electrodes 151 and 152 or the arrangement thereof are not limited to any particular example, and one or a plurality of the connection electrodes 151 and 152 may be disposed in the first and second cover portions 112 and 113, respectively.

The connection electrodes 151 and 152 may connect the internal electrodes 121 and 122 disposed in an outermost region to a region of the external electrodes extending to the first surface 1 or the second surface 2, such that a current path of the multilayer electronic component 100b may be increased, and consequently, equivalent series resistance (ESR) of the multilayer electronic component 100b may be reduced.

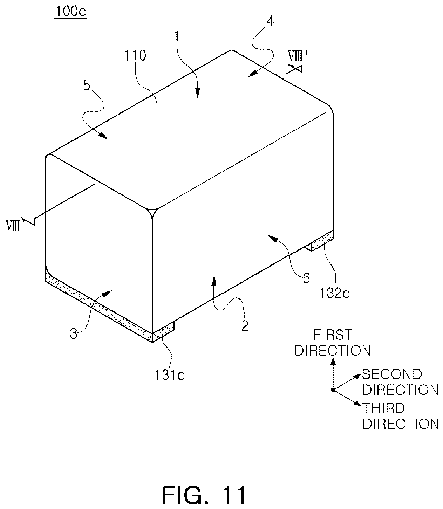

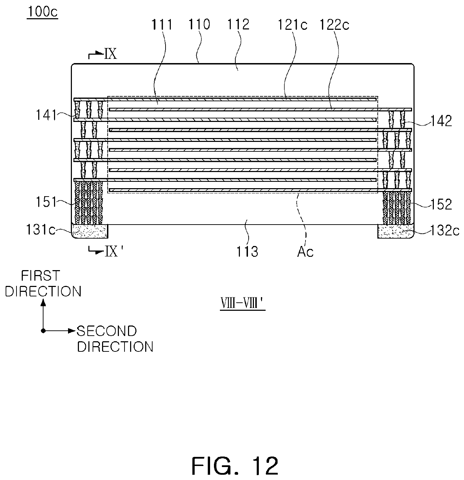

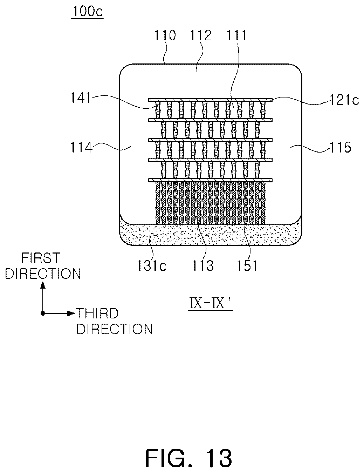

FIG. 11 is a perspective diagram illustrating a multilayer electronic component according to a second modified example of a first embodiment. FIG. 12 is a cross-sectional diagram illustrating a cross-sectional surface, taken along line VIII-VIII' in FIG. 11. FIG. 13 is a cross-sectional diagram illustrating a cross-sectional surface, taken along line IX-IX' in FIG. 12.

Hereinafter, with reference to FIGS. 11 to 13, the multilayer electronic component 100c according to a second modified example of the first embodiment may be described. The same/similar reference numerals may be used for the components the same as or similar to the components of the multilayer electronic components 100a and 100b described with reference to FIGS. 1 to 10, and overlapping descriptions may not be provided.

The external electrodes 131c and 132c of the multilayer electronic component 100c may have a lower-surface electrode structure. For example, the first and second external electrodes 131c and 132c may be disposed on the second surface 2 and may not be disposed on the first surface 1. The first and second external electrodes 131c and 132c may not be disposed on the third surface to the sixth surface 3, 4, 5, and 6, but an embodiment thereof is not limited thereto, and the first and second external electrodes 131c and 132c may extend to at least one of the third to sixth surfaces 3, 4, 5, and 6.

The multilayer electronic component 100c may include a first connection electrode 151 penetrating the cover portions 113 and connecting the first internal electrode 121c disposed in an outermost region in the first direction to the first external electrode 131c, and a second connection electrode 152 penetrating the cover portions 113 and connecting the second internal electrode 122c disposed in an outermost region in the first direction to the second external electrode 132c. The first and second connection electrodes 151 and 152 may be disposed in the second cover portions 113, and may not be disposed in the first cover portions 112.

For example, the internal electrodes 121c and 122c may be spaced apart from the third to sixth surfaces 3, 4, 5, and 6. The internal electrodes 121c and 122c may not be exposed to an external surface of the body 110, and accordingly, moisture resistance reliability of the multilayer electronic component 100c may be prevented from being deteriorated.

By disposing the external electrodes 131c and 132c only on the second surface 2, miniaturization of the multilayer electronic component 100c may be implemented and bending strength of the multilayer electronic component 100c may be improved.

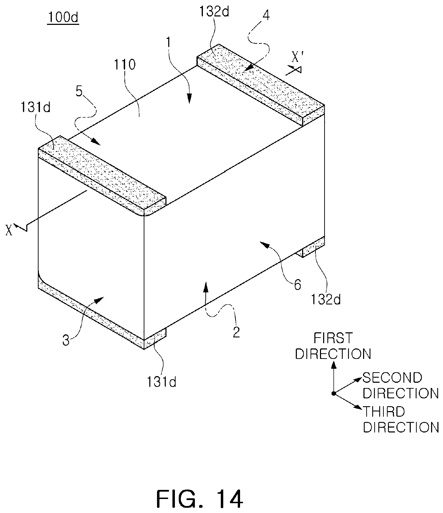

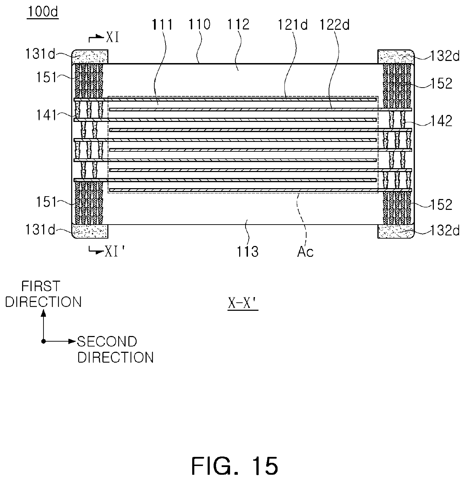

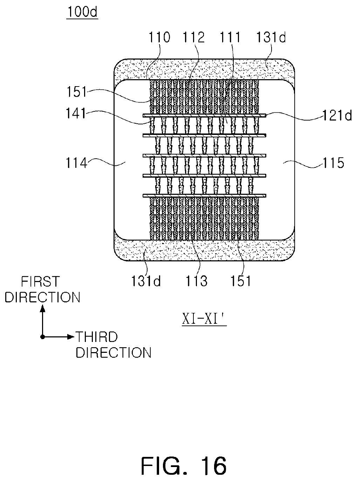

FIG. 14 is a perspective diagram illustrating a multilayer electronic component according to a third modified example of a first embodiment. FIG. 15 is a cross-sectional diagram illustrating a cross-sectional surface, taken along line X-X' in FIG. 14. FIG. 16 is a cross-sectional diagram illustrating a cross-sectional surface, taken along line XI-XI' in FIG. 15.

Hereinafter, the multilayer electronic component 100d according to a third modified example of the first embodiment may be described with reference to FIGS. 14 to 16. The same/similar reference numerals may be used for components the same as or similar to the components of the multilayer electronic components 100a, 100b, and 100c described with reference to FIGS. 1 to 13, and overlapping descriptions may not be provided.

The first external electrode 131d of the multilayer electronic component 100d may be disposed on the first surface 1 and the second surface 2, and the second external electrode 132d may be disposed on the first surface and the second surfaces 1 and 2. The first and second external electrodes 131d and 132d disposed on the first surface 1 may be spaced apart from the first and second external electrodes 131d and 132d disposed on the second surface 2. The first and second external electrodes 131c and 132c may not be disposed on the third to sixth surfaces 3, 4, 5, and 6, but an embodiment thereof is not limited thereto, and the first and second external electrodes 131d and 132d may extend to at least one of the third to sixth surfaces 3, 4, 5, and 6.

The multilayer electronic component 100d may include a first connection electrode 151 penetrating the cover portions 112 and 113 and connecting the first internal electrode 121d disposed in an outermost region in the first direction to the first external electrode 131d, and a second connection electrode 152 penetrating the cover portions 112 and 113 and connecting the second internal electrode 122d disposed in an outermost region in the first direction to the second external electrode 132d. The first and second connection electrodes 151 and 152 may be disposed in the first and second cover portions 112 and 113.

The internal electrodes 121d and 122d may be spaced apart from the third to sixth surfaces 3, 4, 5, and 6. The internal electrodes 121d and 122d may not be exposed to the external surface of the body 110, and accordingly, moisture resistance reliability of the multilayer electronic component 100d may be prevented from being deteriorated.

Also, the multilayer electronic component 100d may have improved mounting properties as compared to the multilayer electronic component 100c as the external electrodes 131d and 132d are disposed on the first surface 1 and the second surface 2, respectively.

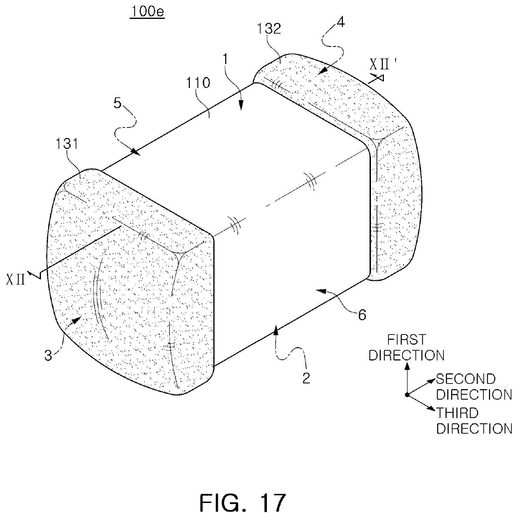

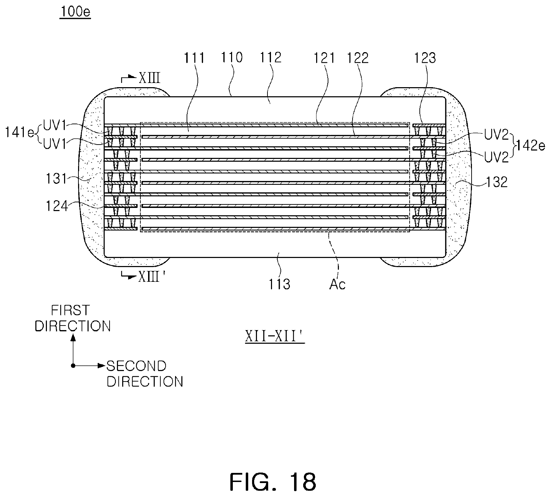

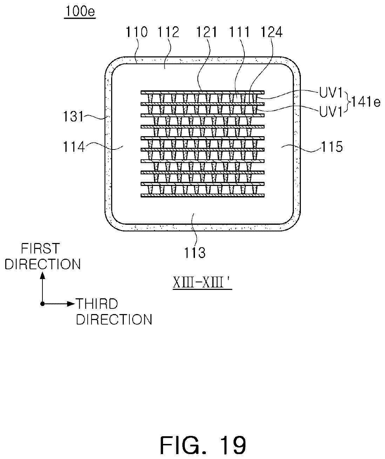

FIG. 17 is a perspective diagram illustrating a multilayer electronic component according to a fourth modified example of a first embodiment. FIG. 18 is a cross-sectional diagram illustrating a cross-sectional surface, taken along line XII-XII' in FIG. 17. FIG. 19 is a cross-sectional diagram illustrating a cross-sectional surface, taken along line XIII-XIII' in FIG. 18.

Hereinafter, a multilayer electronic component 100e according to a fourth modified example of the first embodiment may be described with reference to FIGS. 17 to 19. The same/similar reference numerals may be used for components the same as or similar to the components of the multilayer electronic component 100a described with reference to FIGS. 1 to 7C, and overlapping descriptions may not be provided.

The first via electrode 141e of the multilayer electronic component 100e may have a plurality of first unit vias UV1 laminated in the first direction, and the second via electrode 142e may have a plurality of second unit vias UV2 laminated in the first direction.

The body 110 of the multilayer electronic component 100e may include a first auxiliary electrode 123 spaced apart from the first internal electrode 121 in the second direction and disposed between the plurality of second unit vias UV2 laminated in the first direction, and a second auxiliary electrode 124 spaced apart from the second internal electrode 122 in the second direction and disposed between the plurality of first unit vias UV1 laminated in the first direction.

The first auxiliary electrode 123 may be connected to the second external electrode 132 on the fourth surface 4, and the second auxiliary electrode 124 may be connected to the first external electrode 131 on the third surface 3. However, an embodiment thereof is not limited thereto, and the first auxiliary electrode 123 may be spaced apart from the fourth surface 4, and the second auxiliary electrode 124 may be spaced apart from the third surface 3.

The first auxiliary electrode 123 may be connected to the plurality of second via electrodes 142e, and the second auxiliary electrode 124 may be connected to the plurality of first via electrodes 141e. For example, the plurality of second via electrodes 142e penetrating the same dielectric layer 111 may penetrate the same first auxiliary electrode 123, and the plurality of first via electrodes 141e penetrating the same dielectric layer 111 may penetrate the same second auxiliary electrode 124.

By disposing the auxiliary electrodes 123 and 124, a step difference due to a difference in the number of laminations with the capacitance formation portion Ac may be prevented, and accordingly, recess of the margin region may be prevented effectively. Also, by appropriately disposing the auxiliary electrodes 123 and 124, electrical connection between the adjacent internal electrodes 121 or 122 may be stably ensured even when the units via UV1 and UV2 included in the via electrodes 141e and 142e is misaligned.

The metal included in the auxiliary electrodes 123 and 124 may be one or more of Ni, Cu, Pd, Ag, Au, Pt, Sn, W, Ti and alloys thereof. The auxiliary electrodes 123 and 124 may include the same metal as a metal of the internal electrodes 121 and 122, but an embodiment thereof is not limited thereto.

To prevent a short circuit due to contact between the internal electrodes 121 and 122 and the auxiliary electrodes 123 and 124 to which voltages of different polarities are applied, a distance in the second direction between the first internal electrode 121 and the first auxiliary electrode 123 and a distance in the second direction between the second internal electrode 122 and the second auxiliary electrode 124 may be 10% to 90% of a distance between the first internal electrode 121 and the fourth surface 4 or a distance between the second internal electrode 122 and the third surface 3.

### (Second embodiment)

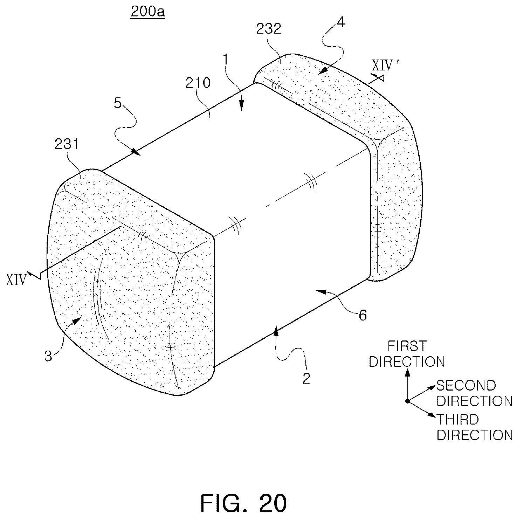

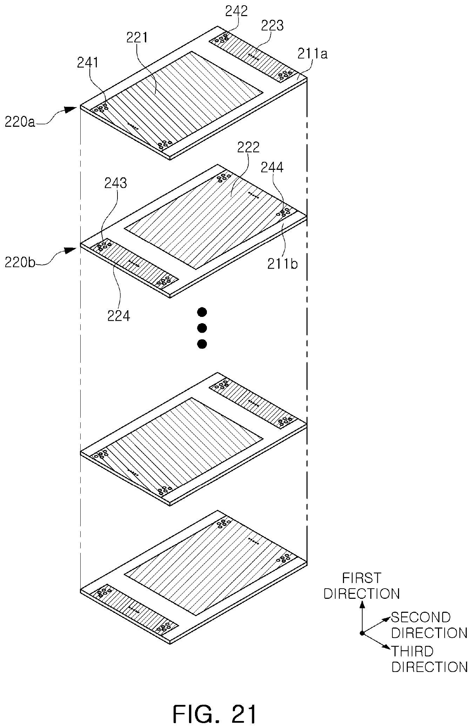

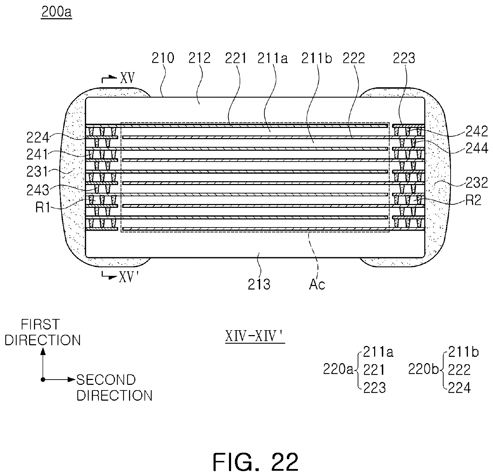

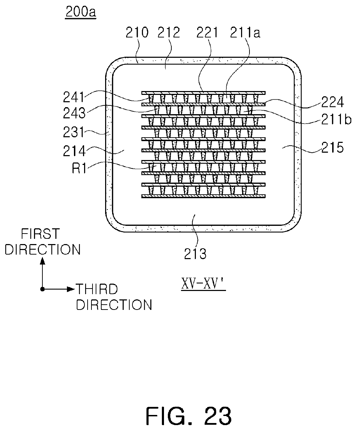

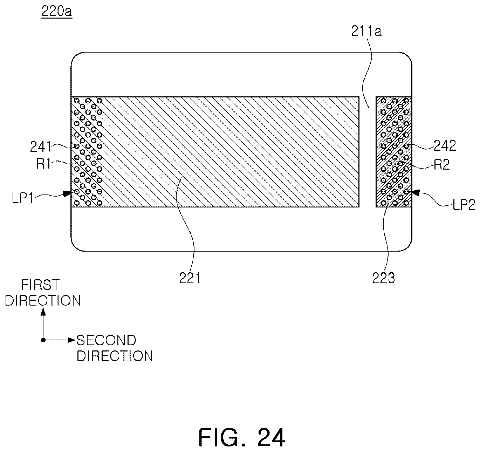

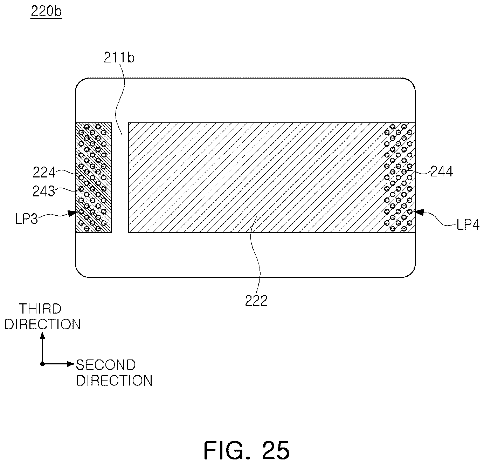

FIG. 20 is a perspective diagram illustrating a multilayer electronic component according to a second embodiment. FIG. 21 is an exploded perspective diagram illustrating a multilayer electronic component according to a second embodiment. FIG. 22 is a cross-sectional diagram illustrating a cross-sectional surface, taken along line XIV-XIV' in FIG. 20. FIG. 23 is a cross-sectional diagram illustrating a cross-sectional surface, taken along line XV-XV' in FIG. 22. FIG. 24 is a plan diagram illustrating a first internal electrode layer of a multilayer electronic component according to a second embodiment. FIG. 25 is a plan diagram illustrating a second internal electrode layer of a multilayer electronic component according to a second embodiment.

Hereinafter, with reference to FIGS. 20 to 25, a multilayer electronic component 200a according to a second embodiment will be described. The same/similar reference numerals may be used for components the same as or similar to the components of the multilayer electronic component 100a described with reference to FIGS. 1 to 6, and overlapping descriptions may not be provided.

The multilayer electronic component 200a according to the second embodiment may include a body 210, external electrodes 231, 232 and via electrodes 241, 242, 243, and 244.

The body 210 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first to fourth surfaces 1, 2, 3, and 4 opposing each other in the third direction.

The body 210 may include a first internal electrode layer 220a and a second internal electrode layer 220b disposed alternately in the first direction.

The first internal electrode layer 220a may include a first dielectric layer 211a, and a first internal electrode 221 and a first auxiliary electrode 223 spaced apart from each other in the second direction on the first dielectric layer 211a.

The second internal electrode layer 220b may include a second dielectric layer 211b, and a second internal electrode 222 and a second auxiliary electrode 224 spaced apart from each other in the second direction on the second dielectric layer 211b.

The first internal electrode 221 may be connected to the first external electrode 231 on the third surface 3, and the second internal electrode 222 may be connected to the second external electrode 232 on the fourth surface 4. A portion of the first internal electrode 221 may overlap the second internal electrode 222 in the first direction, thereby forming capacitance of the multilayer electronic component 200a.

The first auxiliary electrode 223 may be connected to the second external electrode 232 on the fourth surface 4, and the second auxiliary electrode 224 may be connected to the first external electrode 231 on the third surface 3. However, an embodiment thereof is not limited thereto, and the first auxiliary electrode 223 may be spaced apart from the second external electrode 232, and the second auxiliary electrode 224 may be spaced apart from the first external electrode 231.

A dimension of the first internal electrode 221 in the second direction may be greater than a dimension of the first auxiliary electrode 223 in the second direction, and a dimension of the second internal electrode 222 in the second direction may be greater than the dimension of the second auxiliary electrode 224 in the second direction.

The body 210 may include a capacitance formation portion Ac disposed in the body 210 and alternately disposed with the first and second internal electrodes 221 and 222 with the first dielectric layer 211a or the second dielectric layer 211b interposed therebetween and forming capacitance, and cover portions 212 and 213 disposed on both surfaces of the capacitance formation portion Ac opposing each other in the first direction. Also, the body 210 may include margin portions 214 and 215 disposed on both surfaces of the capacitance formation portion Ac opposing each other in the third direction.

The first external electrode 231 and the second external electrode 232 may be disposed on the body 210 and may be connected to the first internal electrode 221 and the second internal electrode 222, respectively. The first external electrode 231 may be disposed on the third surface 3 and may extend to a portion of the first surface and second surfaces 1 and 2, and the second external electrode 232 may be disposed on the fourth surface 4 and may extend to a portion of the first surface and second surfaces 1 and 2. The first and second external electrodes 231 and 232 may also extend to a portion of the fifth and sixth surfaces 5 and 6, respectively.

For example, the external electrodes 231 and 232 may include a base electrode layer in contact with the internal electrodes 221 and 222 and a plating layer disposed on the base electrode layer. The base electrode layer may include, for example, one or more of a sintered electrode layer, a conductive resin layer, and a thin film electrode layer.

The multilayer electronic component 200a according to the second embodiment may include a first via electrode 241 penetrating the first dielectric layer 211a and connecting the first internal electrode 221 to the second auxiliary electrode 224, a second via electrode 242 penetrating the first dielectric layer 211a and connecting the first auxiliary electrode 223 to the second internal electrode 222, a third via electrode 243 penetrating the second dielectric layer 211b and connecting the second auxiliary electrode 224 to the first internal electrode 221, and a fourth via electrode 244 penetrating the second dielectric layer 211b and connecting the second internal electrode 222 to the first auxiliary electrode 223.

For example, the first via electrode 241 may penetrate a region adjacent to the third surface 3 of the first dielectric layer 211a, and the second via electrode 242 may penetrate a region adjacent to the fourth surface 4 of the first dielectric layer 211a. The region adjacent to the third surface 3 of the first dielectric layer 211a may indicate a region (hereinafter, referred to as the first margin region) between the third surface 3 and the capacitance formation portion Ac in the first dielectric layer 211a, and the region adjacent to the fourth surface 4 of the first dielectric layer 211a may indicate a region (hereinafter, referred to as the second margin region) between the fourth surface 4 and the capacitance formation portion Ac in the first dielectric layer 211a.

For example, the third via electrode 243 may penetrate a region adjacent to the third surface 3 of the second dielectric layer 211b, and the fourth via electrode 244 may penetrate a region adjacent to the fourth surface 4 of the second dielectric layer 211b, for example. The region adjacent to the third surface 3 of the second dielectric layer 211b may indicate a region (hereinafter, referred to as the third margin region) between the third surface 3 and the capacitance formation portion Ac in the second dielectric layer 211b, and the region adjacent to the fourth surface 4 of the second dielectric layer 211b may indicate a region (hereinafter, referred to as the fourth margin region) between the fourth surface 4 and the capacitance formation portion Ac in the second dielectric layer 211b.

According to the second embodiment, even when a portion of the internal electrodes 221 and 222 is reduced by the sintering process and contact with the external electrodes 231 and 232 is broken on the third surface 3 or the fourth surface 4, the internal electrodes 221 and 222 may be electrically connected to the external electrodes 231 and 232 through the internal electrodes 221 and 222 or the auxiliary electrodes 224 and 223 on a layer different from the via electrodes 241, 242, 243, and 244. Accordingly, capacitance of the multilayer electronic component 200a may be prevented from deteriorating.

According to the second embodiment, the first via electrode 241 may be shifted from the third via electrode 243 adjacent in the first direction, and the second via electrode 242 may be shifted from the fourth via electrode 244 adjacent in the first direction.

The configuration in which the first via electrode 241 and the third via electrode 243 adjacent to each other in the first direction are shifted from each other may indicate that a conceptual line connecting points at 1/2 widths of the upper surface and the lower surface of the first via electrode 241 in contact with the first internal electrode 221 and the second auxiliary electrode 224, respectively, may not match a conceptual line connecting points at 1/2 widths of the upper surface and the lower surface of the third via electrode 243 in contact with the second auxiliary electrode 224 and the first internal electrode 221, in a cross-section (e.g., FIG. 22) of the body 210 in the first and second directions or a cross-section (e.g., FIG. 23) of the body 210 in the first and third directions.

Similarly, the configuration in which the second via electrode 242 and the fourth via electrode 244 adjacent to each other in the first direction are shifted from each other may indicate that a conceptual line connecting points at 1/2 widths of the upper surface and the lower surface of the second via electrode 242 in contact with the first auxiliary electrode 223 and the second internal electrode 222, may not match a conceptual line connecting points at 1/2 widths of the upper surface and the lower surface of the fourth via electrode 244 in contact with the second internal electrode 222 and the first auxiliary electrode 223.

The first and third via electrodes 241 and 243 adjacent to each other the first direction may be shifted from each other, such that the first and third via electrodes 241 and 243 may be distributed in the first and third margin regions. Accordingly, the first and third via electrodes 241 and 243 may effectively support the first and third margin regions. In other words, recess of the first and third margin regions due to a difference in density between the region in which the first and third via electrodes 241 and 243 are disposed and the region in which the first and third via electrodes 241 and 243 are not disposed in the first and third margin regions, or external stress may be prevented.

Similarly, the second via electrode 242 and the fourth via electrode 244 adjacent to each other in the first direction may be shifted from each other, such that the second and fourth via electrodes 242 and 244 may be distributed in the second and fourth margin regions. Accordingly, the second and fourth via electrodes 242 and 244 may effectively support the second and fourth margin regions. In other words, recess of the second and fourth margin regions due to a difference in density between the region in which second and fourth via electrodes 242 and 244 are disposed and the region in which second and fourth via electrodes 242 and 244 are not disposed in the second and fourth margin regions, or external stress may be prevented.

In an embodiment, the first via electrode 241 may not overlap the third via electrode 243, adjacent in the first direction, in the first direction, and the second via electrode 242 may not overlap the fourth via electrode 244, adjacent in the first direction, in the first direction.

As the first via electrode 241 and the third via electrode 243 adjacent to each other in the first direction are shifted from each other in the first direction, and the second via electrode 242 and the fourth via electrode 244 adjacent to each other in the first direction are shifted from each other in the first direction, the effect of improving mechanical strength of the multilayer electronic component 200a as in the embodiments may be obtained, but when the first via electrode 241 does not overlap the third via electrode 243, adjacent in the first direction, in the first direction, and the second via electrode 242 does not overlap the fourth via electrode 244, adjacent in the first direction, in the first direction, the effect of improvement of mechanical strength in the embodiments may be prominent.

Also, the multilayer electronic component 200a according to the second embodiment may include auxiliary electrodes 223 and 224, such that, even when the first via electrode 241 and the third via electrode 243 do not overlap each other in the first direction, or the second via electrode 242 and the fourth via electrode 244 do not overlap each other in the first direction, electrical connection between the internal electrodes 221 and 222 having the same polarity and adjacent to each other may be assured.

In an embodiment, a plurality of the first via electrodes 241 and a plurality of the second via electrodes 242 penetrating the same first dielectric layer 211a may be provided, and a plurality of the third via electrodes 243 and a plurality of the fourth via electrodes 244 penetrating the same second dielectric layer 211b may be provided. For example, the plurality of first and second via electrodes 241 and 242 penetrating the same first dielectric layer 211a may be arranged in the second and third directions, respectively, and the plurality of third and fourth via electrodes 243 and 244 penetrating the same second dielectric layer 211b may be arranged in the second and third directions, respectively.

Referring to FIGS. 24 and 25, the plurality of first via electrodes 241 penetrating the same first dielectric layer 111a may form a first grid pattern LP1 by being shifted from each other with respect to the second and third directions, and the plurality of second via electrodes 242 penetrating the same first dielectric layer 111a may form a second grid pattern LP2 by being shifted from each other with respect to the second and third directions.

A plurality of third via electrodes 243 penetrating the same second dielectric layer 111b may form a third grid pattern LP3 by being shifted from each other with respect to the second and third directions, and the plurality of fourth via electrodes 244 penetrating the same second dielectric layer 111b may form a fourth grid pattern LP4 by being shifted from each other with respect to the second and third directions.

The first and third grid pattern LP1 and LP3 may be disposed alternately in the body 210 with the first internal electrode 221 or the second auxiliary electrode 224 interposed therebetween. The first and third grid patterns LP1 and LP3 may not overlap each other in the first direction. In other words, the first and third grid patterns LP1 and LP3 including the plurality of first and third via electrodes 241 and 243 arranged in a zigzag pattern, respectively, may not overlap each other in the first direction, such that the effect of improvement of mechanical strength in the embodiments may be prominent.

The second and fourth grid pattern LP2 and LP4 may be disposed alternately in the body 210 with the second internal electrode 222 or with first auxiliary electrode 223 interposed therebetween. The second and fourth grid patterns LP2 and LP4 may not overlap each other in the first direction. In other words, the second and fourth grid patterns LP2 and LP4 including the plurality of second and fourth via electrodes 242 and 244 arranged in a zigzag pattern, respectively, may not overlap each other in the first direction, such that the effect of improvement of mechanical strength in the embodiments may be prominent.

For example, the first dielectric layer 111a may include a first region R1 disposed between two first via electrodes 241 adjacent to each other in the second or third direction among the plurality of first via electrodes 241, and a second region R2 disposed between two second via electrodes 242 adjacent to each other in the second or third direction among the plurality of second via electrodes 242. The plurality of third via electrodes 243 may overlap the first region R1 in the first direction, and the plurality of fourth via electrodes 244 may overlap the second region R2 in the first direction.

Referring to FIGS. 22 and 23, in an embodiment, a width of an upper surface of the first via electrode 241 may be greater than a width of a lower surface of the first via electrode 241, a width of an upper surface of the second via electrode 242 may be greater than a width of an upper surface of the second via electrode 242, a width of an upper surface of the third via electrode 243 may be greater than a width of a lower surface of the third via electrode 243, and a width of an upper surface of the fourth via electrode 244 may be wider than a width of a lower surface of the fourth via electrode 244.

A via formed in a dielectric sheet may be formed, for example, by irradiating a laser beam to the dielectric sheet. In this case, the amount of energy of laser beam may decrease from one surface of the dielectric sheet in which the laser beam is irradiated to the other surface. Accordingly, the width of the first via electrode 241 may gradually decrease from the first internal electrode 221 toward the second auxiliary electrode 224, the width of the second via electrode 242 may gradually decrease from the first auxiliary electrode 223 toward the second internal electrode 222, a width of the third via electrode 243 may gradually decrease from the second auxiliary electrode 224 toward the first internal electrode 221, and the width of the fourth via electrode 244 may gradually decrease from the second internal electrode 222 toward the first auxiliary electrode 223.

A maximum width of the via electrodes 241, 242, 243, and 244 may be varied depending on a size of the multilayer electronic component 200a or a thickness of the dielectric layers 211a and 211b. The maximum width of the via electrodes 241, 242, 243, and 244 is not limited to any particular example, but may be, for example, 0.03 um to 3.0 um.

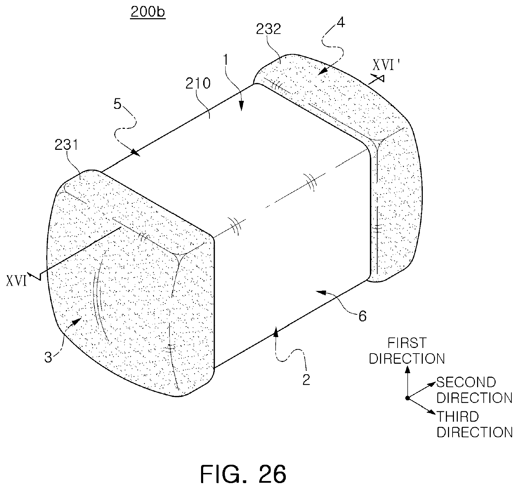

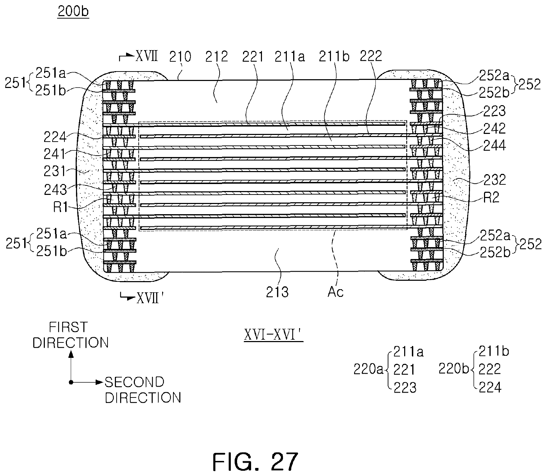

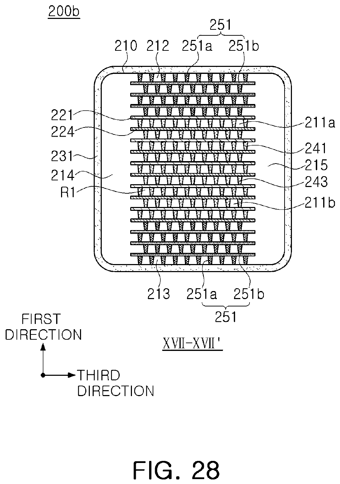

FIG. 26 is a perspective diagram illustrating a multilayer electronic component according to a first modified example of a second embodiment. FIG. 27 is a cross-sectional diagram illustrating a cross-sectional surface, taken along line XVI-XVI' in FIG. 26. FIG. 28 is a cross-sectional diagram illustrating a cross-sectional surface, taken along line XVII-XVII' in FIG. 27.

Hereinafter, the multilayer electronic component 200b according to a first modified example of the second embodiment will be described with reference to FIGS. 26 to 28. The same/similar reference numerals may be used for components the same as or similar to the components of the multilayer electronic component 200a described with reference to FIGS. 20 to 25, and overlapping descriptions may not be provided.

The multilayer electronic component 200b may include first and second connection structures 251 and 252. The first and second connection structures 251 and 252 may be disposed in first cover portions 212 and second cover portions 213, respectively.

The first connection structure 251 may penetrate the cover portions 212 and 213 and may connect the first internal electrode 221 or the second auxiliary electrode 224 disposed in an outermost region with respect to the first direction to the first external electrode 231.

The second connection structure 252 may connect the second internal electrode 222 or the first auxiliary electrode 223 disposed in an outermost region with respect to the first direction to the second external electrode 232.

The first connection structure 251 may include a first connection electrode 251a and a first dummy electrode 251b disposed alternately in the first direction. The second connection structure 252 may include a second connection electrode 252a and a second dummy electrode 252b disposed alternately in the first direction. The first dummy electrode 251b may be connected to the first external electrode 231 on the third surface 3, and the second dummy electrode 252b may be connected to the second external electrode 232 on the fourth surface 4.

The connection structures 251 and 252 may be formed in a similar manner to the auxiliary electrodes 223 and 224 and the via electrodes 241, 242, 243, and 244. For example, the connection structures 251 and 252 may be formed by forming a dummy electrode pattern on a sheet for forming a cover portion on which vias are formed, and laminating the sheet for forming a cover portion on which the dummy electrode pattern is formed in two or more layers.

The connection structures 251 and 252 may have a structure similar to the structures of the auxiliary electrodes 223 and 224 and the via electrodes 241, 242, 243, and 244.

For example, the two first connection electrodes 251a adjacent to each other in the first direction may be shifted from each other, and the two second connection electrodes 252a adjacent to each other in the first direction may be shifted from each other.

For example, a plurality of the first connection electrodes 251a and a plurality of the second connection electrodes 252a may be provided. The plurality of first and second connection electrodes 251a and 252a disposed on the same level may be arranged in the second and third directions, respectively. The first connection electrode 251a may have the aforementioned first or third grid pattern, and the second connection electrode 252a may have the aforementioned second or fourth grid pattern, but an embodiment thereof is not limited thereto.

The first connection structure 251 may connect the first internal electrode 221 or the second auxiliary electrode 224 disposed in an outermost region with respect to the first direction to the region of the first external electrode 231 extending on the first surface 1 or the second surface 2. Also, the second connection structure 252 may connect the second internal electrode 222 or the first auxiliary electrode 223 disposed in an outermost region with respect to the first direction and the region of the second external electrode 232 extending on the first surface 1 or the second surface 2. Accordingly, a current path of the multilayer electronic component 200b may be increased, and consequently, ESR of the multilayer electronic component 200b may be reduced. Also, the connection structures 251 and 252 may effectively improve mechanical strength of the multilayer electronic component 200b.

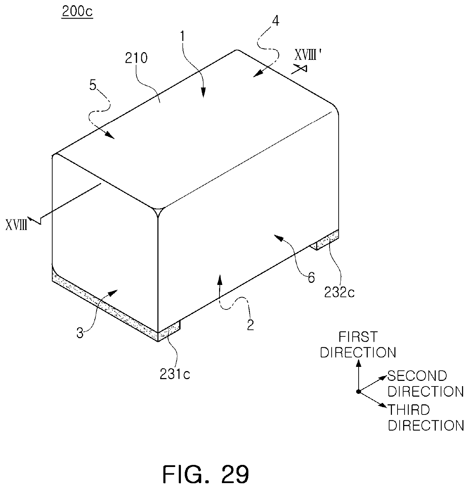

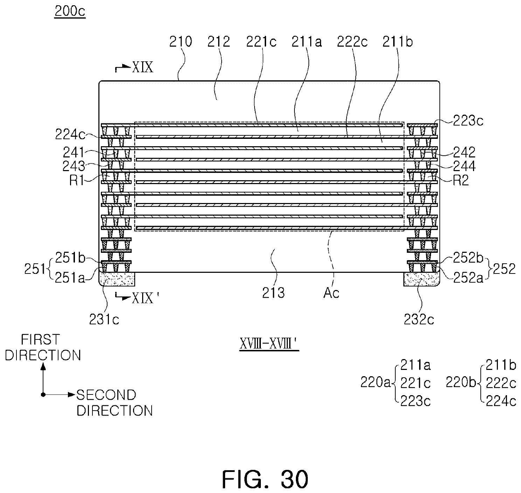

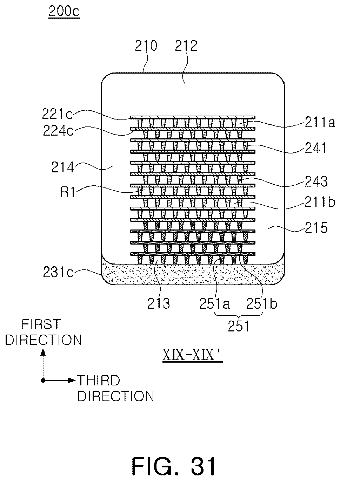

FIG. 29 is a perspective diagram illustrating a multilayer electronic component according to a second modified example of a second embodiment. FIG. 30 is a cross-sectional diagram illustrating a cross-sectional surface, taken along line XVIII-XVIII' in FIG. 29. FIG. 31 is a cross-sectional diagram illustrating a cross-sectional surface, taken along line XIX-XIX' in FIG. 30.

Hereinafter, the multilayer electronic component 200c according to a second modified example of the second embodiment may be described. The same/similar reference numerals may be used for components the same as or similar to the components of the multilayer electronic components 200a and 200b described with reference to FIGS. 20 to 28, and overlapping descriptions may not be provided.

The external electrodes 231c and 232c of the multilayer electronic component 200c may have a lower-surface electrode structure. For example, the first and second external electrodes 231c and 232c may be disposed on the second surface 2, and not on the first surface 1. The first and second external electrodes 231c and 232c may not be disposed on the third to sixth surfaces 3, 4, 5, and 6, but an embodiment thereof is not limited thereto, and the first and second external electrodes 231c and 232c may extend to at least one of the third surface to sixth surfaces 3, 4, 5, and 6.

The multilayer electronic component 200c may include a first connection structure 251 penetrating the cover portions 213 and connecting the first internal electrode 221c or the second auxiliary electrode 224c disposed in an outermost region in the first direction to the first external electrode 231c, and a second connection structure 252 penetrating the cover portions 213 and connecting the second internal electrode 222c or the first auxiliary electrode 223c disposed in the outermost region with respect to the first direction to the second external electrode 232c. The first and second connection structures 251 and 252 may be disposed in the second cover portions 213 and may not be disposed in the first cover portions 212.

The internal electrodes 221c and 222c and the auxiliary electrodes 223c and 224c may be spaced apart from the third surface to the sixth surface 3, 4, 5, and 6, respectively. The internal electrodes 221c and 222c and the auxiliary electrodes 223c and 224c may not be exposed to the external surface of the body 210, and accordingly, moisture resistance reliability of the multilayer electronic component 200c may be prevented from being deteriorated.

The external electrodes 231c and 232c may be disposed only on the second surface 2, thereby enabling miniaturization of the multilayer electronic component 200c and improving bending strength of the multilayer electronic component 200c.

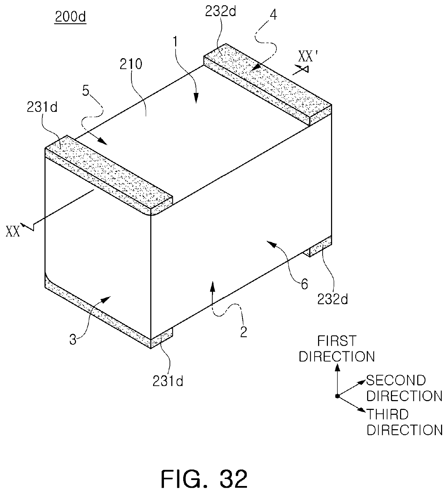

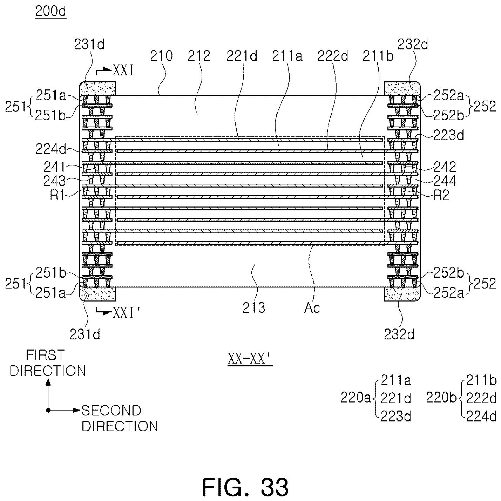

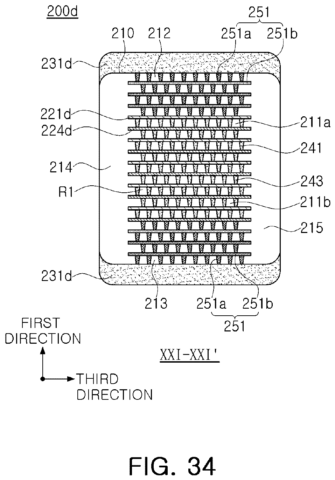

FIG. 32 is a perspective diagram illustrating a multilayer electronic component according to a third modified example of a second embodiment. FIG. 33 is a cross-sectional diagram illustrating a cross-sectional surface, taken along line XX-XX' in FIG. 30. FIG. 34 is a cross-sectional diagram illustrating a cross-sectional surface, taken along line XXI-XXI' in FIG. 30.

Hereinafter, with reference to FIGS. 32 to 34, a multilayer electronic component 200d according to a third modified example of the second embodiment may be described. The same/similar reference numerals may be used for components the same as or similar to the components of the multilayer electronic components 200a, 200b, and 200c described with reference to FIGS. 20 to 31, and overlapping descriptions may not be provided.

The first external electrode 231d of the multilayer electronic component 200d may be disposed on the first surface and second surfaces 1 and 2, respectively, and the second external electrode 232d may be disposed on the first surface and the second surfaces 1 and 2, respectively. The first and second external electrodes 231d and 232d disposed on the first surface 1 may be spaced apart from the first and second external electrodes 231d and 232d disposed on the second surface 2. The first and second external electrodes 231d and 232d may not be disposed on the third surface to the sixth surface 3, 4, 5, and 6, but an embodiment thereof is not limited thereto, and the first and second external electrodes 231d and 232d may extend to at least one of the third surface to sixth surfaces 3, 4, 5, and 6.

The multilayer electronic component 200d may include a first connection structure 251 penetrating the cover portions 212 and 213 and connecting the first internal electrode 221d or the second auxiliary electrode 224d disposed in an outermost region in the first direction to the first external electrode 231d, and a second connection structure 252 penetrating the cover portions 212 and 213 and connecting the second internal electrode 222d or the first auxiliary electrode 223d disposed in the outermost region with respect to the first direction to the second external electrode 232d. The first and second connection structures 251 and 252 may be disposed in the first and second cover portions 212 and 213, respectively.

The internal electrodes 221d and 222d and the auxiliary electrodes 223d and 224d may be spaced apart from the third to sixth surfaces 3, 4, 5, and 6, respectively.

The multilayer electronic component 200d may assure improved mounting properties as compared to the multilayer electronic component 200c by including the external electrodes 231d and 232d disposed on the first surface and second surface 1 and 2, respectively.

### (Method of manufacturing multilayer electronic component)

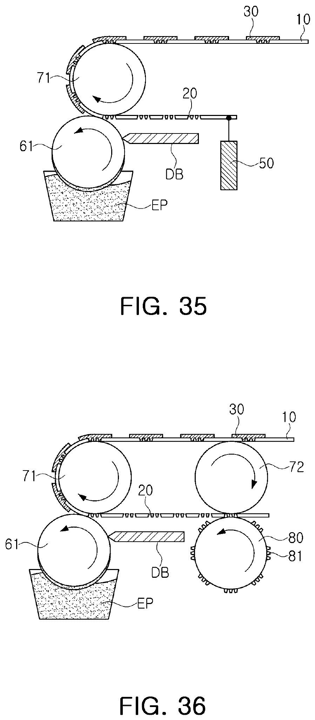

FIG. 35 is a cross-sectional diagram illustrating a charging and printing process for manufacturing a multilayer electronic component according to first or second embodiments.

Hereinafter, an example of a method of manufacturing multilayer electronic components 100a and 200a according to the first or second embodiment may be described with reference to FIG. 35.

The method of manufacturing a multilayer electronic component will be described with respect to the multilayer electronic components 100a and 200a according to the first embodiment or the second embodiment, which will be applied to the multilayer electronic components 100b, 100c, 100d, and 100e according to the first to fourth modified example of the first embodiment and to the multilayer electronic components 200b, 200c, and 300d according to the first to third modified examples of the second embodiment.

Hereinafter, processes of the method of manufacturing a multilayer electronic component may be described.

### (Preparing dielectric sheet)

Dielectric powder to form a dielectric sheet 10 may be prepared. As an example of the dielectric powder, BaTiO₃, (Ba₁₋ₓCaₓ)TiO₃ (0<x<1), Ba(Ti_{x-y}Ca_{y})O₃ (0<y<1), (Ba₁₋ₓCaₓ)(Ti_{1- y}Zr_{y})O₃ (0<x<1, 0<y<1), Ba(Ti_{1-y}Zr_{y})O₃ (0<y<1), CaZrO₃, or (Ca₁₋ₓSrₓ) (Zr_{1-y}Ti_{y})O₃ (0<x≤0.5, 0<y≤0.5) may be used. BaTiO₃ powder may be synthesized, for example, by reacting titanium raw materials such as titanium dioxide with barium raw materials such as barium carbonate. A method of synthesizing dielectric powder may include, for example, a solid phase method, a sol-gel method, and a hydrothermal synthesis method, but an embodiment thereof is not limited thereto.

Thereafter, the prepared dielectric powder may be dried and pulverized, a dielectric slurry may be prepared by mixing an organic solvent such as ethanol and a binder such as polyvinyl butyral, the dielectric slurry may be applied on the carrier film and dried, thereby manufacturing the dielectric sheet 10.

The dielectric sheet 10 may form a dielectric layer by sintering a unit laminate, which will be described later.

### (Forming via)

The manufactured dielectric sheet 10 may be continuously supplied, for example, by moving from a supply roller (not illustrated) on which the dielectric sheet 10 is wound to a recovery roller (not illustrated) on which the dielectric sheet 10 is wound.

In this case, a via 20 may be formed on the dielectric sheet 10 continuously supplied. The forming the via 20 may be performed, for example, by irradiating a laser beam to the dielectric sheet 10. The laser beam may be irradiated from the laser device 50 disposed on the dielectric sheet 10.

The type of the laser device 50 is not limited to any particular example, and for example, CO₂ laser, YAG laser, femtosecond laser, or picosecond UV laser may be used. The via 20 may be formed by laser processing and may have a tapered shape of which a width may gradually decrease from one surface of the dielectric sheet 10 to which the laser is irradiated to the other surface.

### (Filling)

Thereafter, a filling process of filling the via 20 with electrode paste EP may be performed. The electrode paste EP may include, for example, metal powder, binder, organic solvent, or the like.

The method of filling the electrode paste EP in the via 20 is not limited to any particular example. For example, as illustrated in FIG. 35, the dielectric sheet 10 may pass between the application roller 61 and the cylinder 71. The application roller 61 may be in contact with the electrode paste EP, and the electrode paste EP may be filled in a concave portion (not illustrated) formed on a circumferential surface of the application roller 61 by rotating the application roller 61.

The application roller 61 and the cylinder 71 may apply pressure to the dielectric sheet 10 by rotating in opposite directions. The electrode paste EP applied to the circumferential surface of the application roller 61 may be filled in the via 20 formed on the moving dielectric sheet 10 by pressure. The electrode paste EP filled in the via 20 may form a via electrode through sintering of a unit laminate, which will be described later.

The excess electrode paste EP applied to an external surface of the application roller 61 may be removed using a doctor blade DB.

### (Printing)

A printing process of printing the internal electrode pattern 30 connected to the via 20 on the dielectric sheet 10 may be performed. The method of forming the internal electrode pattern 30 is not limited to any particular example. For example, the internal electrode pattern 30 may be formed using the application roller 61 and the cylinder 71. That is, the printing process may include supplying the electrode paste EP to the circumferential surface of the application roller 61 and applying the electrode paste EP to the dielectric sheet 10 by allowing the dielectric sheet 10 to be in contact with the application roller 61.

In this case, by controlling the shape of a concave portion (not illustrated) formed on an external surface of the application roller 61, the via 20 may be filled with the electrode paste EP and the internal electrode pattern 30 may be formed simultaneously. That is, in an embodiment, the filling process and the printing process may be performed simultaneously. The printed internal electrode pattern 30 may be dried using a drying device.

The internal electrode pattern 30 may form an internal electrode by sintering a unit laminate, which will be described later. Also, although not illustrated, an auxiliary electrode pattern forming an auxiliary electrode by sintering the unit laminate may also be formed in the same manner as the internal electrode pattern 30.

### (Laminating)

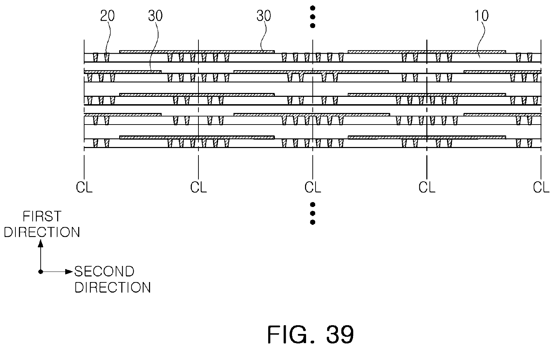

FIG. 39 is a cross-sectional diagram illustrating a process of forming a laminate for manufacturing a multilayer electronic component according to a first embodiment.

First, a laminating process for manufacturing a multilayer electronic component according to the first embodiment will be described.

As illustrated in FIG. 39, the dielectric sheet 10 on which the internal electrode pattern 30 is printed may be separated from the carrier film and may be laminated in a predetermined number of sheets, thereby forming a laminate.

In the case of the laminate to form the multilayer electronic component 100a according to the first embodiment, the vias 20 formed on different dielectric sheets 10 may be laminated in the first direction and may be in contact with each other. The via 20 laminated in the first direction may form the via electrodes 141 and 142 by sintering.

In this case, to form the via electrodes 141 and 142, the alignment between the vias 20 formed on different dielectric sheets 10 may need to coincide in the laminating process, but as the via 20 has a tapered shape, so that the alignment may coincide more easily.

To form the multilayer electronic component 100d according to a fourth modified example of the first embodiment, an auxiliary electrode pattern may be formed on the dielectric sheet 10. In this case, it may not be necessary to coincide the alignments between the vias 20 formed on different dielectric sheets 10, such that the manufacturing process may be easily performed.

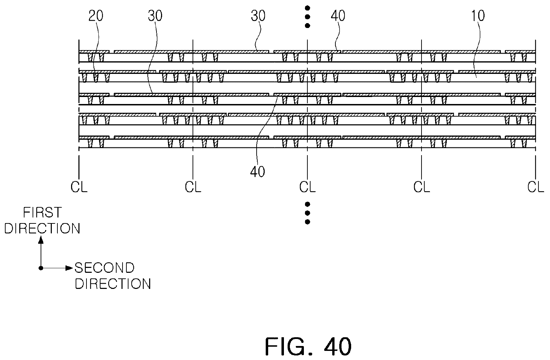

FIG. 40 is a cross-sectional diagram illustrating a process of forming a laminate for manufacturing a multilayer electronic component according to a second embodiment.

Hereinafter, a laminating process for manufacturing a multilayer electronic component according to the second embodiment may be described with reference to FIG. 40.

As illustrated in FIG. 40, the dielectric sheet 10 on which the internal electrode pattern 30 and the auxiliary electrode pattern 40 are printed may be separated from the carrier film and may be laminated in a predetermined number of sheets, thereby forming a laminate. The auxiliary electrode pattern 40 may be formed between two internal electrode patterns 30 adjacent in the second direction.

Since the laminate for forming the multilayer electronic component 200a according to the second embodiment may include the auxiliary electrode pattern 40, it may not be necessary to coincide the alignments between the vias 20 formed on different dielectric sheets 10, such that the manufacturing process may be easily performed.

In the upper and lower portions of the laminate in the first direction, a predetermined number of layers may be laminated to form a cover portion on which an internal electrode pattern and an auxiliary electrode pattern are not formed to form cover portions after sintering.

To form the multilayer electronic components 100b, 100c, and 100d according to the first to third modified examples of the first embodiment, a sheet for forming a cover portion, on which vias are formed, may be laminated in a predetermined number of layers on the upper and lower portions of the laminate in the first direction.

To manufacture the multilayer electronic components 200b, 200c, and 200d according to the first to third modified examples of the second embodiment, a sheet for forming a cover portion, on which vias and dummy electrode patterns are formed, may be laminated in a predetermined number of layers on the upper and lower portions of the laminate in the first direction.

### (Cutting and sintering)

Thereafter, the laminate may be pressed, and may be cut out along the plurality of cutting line CL, thereby obtaining a unit laminate as illustrated in FIGS. 39 and 40.

Also, the body may be obtained by sintering the unit laminate. The sintering may be performed, for example, at a temperature of 1000°C or more and 1400°C or less, but an embodiment thereof is not limited thereto.

### (Forming external electrode)

Thereafter, an external electrode may be formed on the body. The method of forming the external electrode is not limited to any particular example.

When the external electrode may include a sintered electrode layer, the forming an external electrode may include dipping the body into a sintering paste including metal powder and glass frit, binder and organic solvent, and sintering the sintering paste at a temperature of 500°C to 900°C.

However, an embodiment thereof is not limited thereto, and to manufacture the multilayer electronic component 100c, 100d, 200c, and 200d according to the second and third modified example of the first and second embodiments, having a lower-surface electrode structure, the forming an external electrode may include transferring a sheet including metal to the body.

When the external electrode includes a conductive resin layer, the forming an external electrode may include dipping the body into a conductive resin composition including metal powder, resin, binder, and organic solvent, and curing and performing heat treatment at a temperature of 250 °C to 550 °C.

When the external electrode includes a thin film electrode layer, the forming an external electrode may include performing an electrolytic plating method, electroless plating method, atomic layer deposition (ALD) method, chemical vapor deposition (CVD) method and/or sputtering method.

Also, a plating layer may be formed by further performing an electrolytic plating method and/or an electroless plating method.

FIGS. 36 to 38 are cross-sectional diagrams illustrating the modified example in FIG. 35.

Hereinafter, a modified example of the method of manufacturing a multilayer electronic component according to the first embodiment or the second embodiment may be described with reference to FIGS. 36 to 38.

The same/similar reference numeral may be used for components the same as or similar to the components described with reference to FIG. 35, and the overlapping description may not be provided.

Referring to FIG. 36, the forming the via 20 may be performed by allowing the dielectric sheet 10 to be in contact with the imprint roller 80 on which the concave portion 81 is disposed on the circumferential surface.

Specifically, the dielectric sheet 10 may pass between the imprint roller 80 and the cylinder 72. In this case, the imprint roller 80 and the cylinder 72 may apply pressure to the dielectric sheet 10 by rotating in opposite directions. The via 20 may be formed in the dielectric sheet 10 by the pressure and the concave portion 81.

The concave portion 81 formed on the circumferential surface of the imprint roller 80 may have a pattern corresponding to a grid pattern of the via electrode.

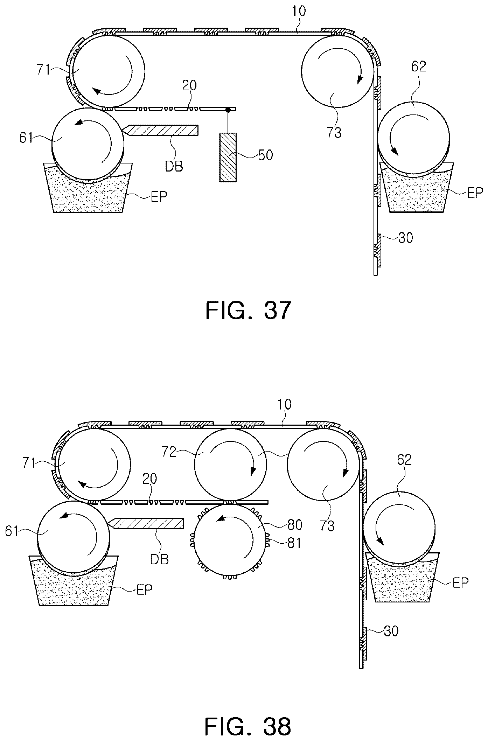

Referring to FIG. 37, the via 20 may be formed by irradiating a laser beam to the dielectric sheet 10, and the electrode paste EP may be filled in the via 20 using a application roller 61 and a cylinder 71.

Thereafter, the internal electrode pattern 30 may be formed separately by applying the electrode paste EP on the dielectric sheet 10 using the application roller 62 and the cylinder 73. That is, the filling process and the printing process may be performed in order.

Referring to FIG. 38, the via 20 may be formed at the dielectric sheet 10 by using the imprint roller 80 on which the concave portion 81 is disposed on the circumferential surface and the cylinder 72, and the electrode paste EP may be filled in the via 20 by using the application roller 61 and the cylinder 71.

Specifically, the dielectric sheet 10 may pass between the imprint roller 80 and the cylinder 72. In this case, the imprint roller 80 and the cylinder 72 may apply pressure to the dielectric sheet 10 by rotating in opposite directions, and accordingly, the via 20 may be formed in the dielectric sheet 10.

Thereafter, the internal electrode pattern 30 may be separately formed by applying the electrode paste EP to the dielectric sheet 10 using the application roller 62 and form cylinder 73. That is, the filling process and form printing process may be performed in order.

According to the aforementioned embodiments, a multilayer electronic component having excellent mechanical strength and electrical properties may be provided.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The above suggested embodiments may be implemented do not exclude the possibilities of combination with features of other embodiments. For example, even though the features described in an embodiment are not described in the other embodiment, the description may be understood as relevant to the other embodiment unless otherwise indicated.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right of the embodiments.

While the embodiments have been illustrated and described above, it will be configured as apparent to those skilled in the art that modifications and variations could be made without departing from the scope in the embodiments as defined by the appended claims.

## Claims

1. A multilayer electronic component, comprising:
a body including a dielectric layer and first and second internal electrodes disposed alternately in a first direction with the dielectric layer therebetween, and including a first surface and a second surface opposing each other in the first direction, a third surface and a fourth surface connected to the first surface and the second surface and opposing each other in a second direction, and a fifth surface and a sixth surface connected to the first surface to the fourth surface and opposing each other in a third direction;
first and second external electrodes disposed on the body and connected to the first and second internal electrodes, respectively;
first via electrodes penetrating the dielectric layer and connecting two first internal electrodes adjacent to each other in the first direction; and
second via electrodes penetrating the dielectric layer and connecting two second internal electrodes adjacent to each other in the first direction,
wherein two first via electrodes adjacent to each other in the first direction are shifted from each other, and two second via electrodes adjacent to each other in the first direction are shifted from each other.

2. The multilayer electronic component of claim 1, wherein a plurality of first via electrodes and a plurality of second via electrodes, penetrating a same dielectric layer, are provided,
wherein the plurality of first and second via electrodes penetrating the same dielectric layer are arranged in the second and third directions.

3. The multilayer electronic component of claim 1,
wherein the first internal electrode is connected to the first external electrode on the third surface, and
wherein the second internal electrode is connected to the second external electrode on the fourth surface.

4. The multilayer electronic component of claim 1,
wherein the first via electrode comprises first unit vias laminated in the first direction,
wherein the second via electrode comprises second unit vias laminated in the first direction,
wherein a width of an upper surface of the first unit via is greater than a width of a lower surface of the first unit via, and
wherein a width of an upper surface of the second unit via is greater than a width of a lower surface of the second unit via.

5. The multilayer electronic component of claim 4, wherein the body includes a first auxiliary electrode spaced apart from the first internal electrode in the second direction and disposed between the plurality of second unit vias laminated in the first direction, and a second auxiliary electrode spaced apart from the second internal electrode in the second direction and disposed between the plurality of first unit vias laminated in the first direction.

6. The multilayer electronic component of claim 1,
wherein the body includes a capacitance formation portion in which the first and second internal electrodes are disposed alternately in the first direction with the dielectric layer therebetween, and cover portions disposed on both surfaces of the capacitance formation portion opposing each other in the first direction,
wherein the first external electrode is disposed on the third surface and extends to a portion of the first surface and the second surface,
wherein the second external electrode is disposed on the fourth surface and extends to a portion of the first surface and the second surface, and
wherein the multilayer electronic component further includes a first connection electrode penetrating the cover portions and connecting the first internal electrode disposed in an outermost region thereof in the first direction to the first external electrode, and a second connection electrode penetrating the cover portions and connecting the second internal electrode disposed in an outermost region thereof in the first direction to the second external electrode.

7. The multilayer electronic component of claim 1,
wherein the body includes a capacitance formation portion in which the first and second internal electrodes are disposed alternately in the first direction with the dielectric layer therebetween, and cover portions disposed on both surfaces of the capacitance formation portion opposing each other in the first direction,
wherein the first and second external electrodes are disposed on the second surface, and are not disposed on the first surface, and
wherein the multilayer electronic component further includes a first connection electrode penetrating the cover portion and connecting the first internal electrode disposed in an outermost region with respect to the first direction to the first external electrode, and a second connection electrode penetrating the cover portion and connecting the second internal electrode disposed in an outermost region with respect to the first direction to the second external electrode.

8. The multilayer electronic component of claim 1,
wherein the body includes a capacitance formation portion in which the first and second internal electrodes are disposed alternately in the first direction with the dielectric layer therebetween, and cover portions disposed on both surfaces of the capacitance formation portion opposing each other in the first direction,
wherein the first and second external electrodes are disposed on the first surface and the second surface, respectively,
wherein the first and second external electrodes disposed on the first surface are spaced apart from the first and second external electrodes disposed on the second surface, and
wherein the multilayer electronic component further includes a first connection electrode penetrating the cover portion and connecting the first internal electrode disposed in an outermost region with respect to the first direction to the first external electrode, and a second connection electrode penetrating the cover portion and connecting the second internal electrode disposed in an outermost region with respect to the first direction to the second external electrode.

9. A multilayer electronic component, comprising:
a body including a first surface and a second surface opposing each other in a first direction, a third surface and a fourth surface connected to the first surface and the second surface and opposing each other in a second direction, and a fifth surface and a sixth surface connected to the first surface to the fourth surface and opposing each other in a third direction, and including a first internal electrode layer including a first dielectric layer, and a first internal electrode and a first auxiliary electrode spaced apart from each other in the second direction on the first dielectric layer, and a second internal electrode layer including a second dielectric layer, and a second internal electrode and a second auxiliary electrode spaced apart from each other in the second direction on the second dielectric layer, wherein the first internal electrode layer and the second internal electrode layer are disposed alternately in the first direction;
first and second external electrodes disposed on the body and connected to the first and second internal electrodes, respectively;
a first via electrode penetrating the first dielectric layer and connecting the first internal electrode to the second auxiliary electrode;
a second via electrode penetrating the first dielectric layer and connecting the first auxiliary electrode to the second internal electrode;
a third via electrode penetrating the second dielectric layer and connecting the second auxiliary electrode to the first internal electrode; and
a fourth via electrode penetrating the second dielectric layer and connecting the second internal electrode to the first auxiliary electrode,
wherein the first via electrode is shifted from the third via electrode adjacent thereto in the first direction, and the second via electrode is shifted from the fourth via electrode adjacent thereto in the first direction.

10. The multilayer electronic component of claim 9,
wherein the first via electrode includes a plurality of first via electrodes and the second via electrode includes a plurality of the second via electrodes, penetrating same first dielectric layer, and
wherein the third via electrode includes a plurality of the third via electrodes and the fourth via electrode includes a plurality of the fourth via electrodes, penetrating same second dielectric layer,
wherein the plurality of first and second via electrodes penetrating the same first dielectric layer are arranged in the second and third directions, respectively, and
wherein the plurality of third and fourth via electrodes penetrating the same second dielectric layer are arranged in the second and third directions, respectively.

11. The multilayer electronic component of claim 10,
wherein the first dielectric layer includes a first region disposed between two first via electrodes adjacent to each other in the second or third direction among the plurality of first via electrodes, and a second region disposed between two second via electrodes adjacent to each other in the second or third direction among the plurality of second via electrodes,
wherein the plurality of third via electrodes overlap the first region in the first direction, and
wherein the plurality of fourth via electrodes overlap the second region in the first direction.

12. The multilayer electronic component of claim 9,
wherein the first internal electrode is connected to the first external electrode on the third surface, and
wherein the second internal electrode is connected to the second external electrode on the fourth surface,
wherein the first auxiliary electrode is connected to the second external electrode at the fourth surface, and
wherein the second auxiliary electrode is connected to the first external electrode on the third surface.

13. The multilayer electronic component of claim 9,
wherein the body includes a capacitance formation portion in which the first and second internal electrodes are alternately disposed with the first dielectric layer or the second dielectric layer therebetween, and cover portions disposed on both surfaces of the capacitance formation portion opposing each other in the first direction,
wherein the first external electrode is disposed on the third surface and extends to a portion of the first surface and second surface,
wherein the second external electrode is disposed on the fourth surface and extends to a portion of the first surface and second surface, and
wherein the multilayer electronic component further includes a first connection structure penetrating the cover portion and connecting the first internal electrode or the second auxiliary electrode disposed in an outermost region with respect to the first direction to the first external electrode, and a second connection structure penetrating the cover portion and connecting the second internal electrode or the first auxiliary electrode disposed in an outermost region with respect to the first direction to the second external electrode.

14. The multilayer electronic component of claim 9,
wherein the body includes a capacitance formation portion in which the first and second internal electrodes are alternately disposed with the first dielectric layer or the second dielectric layer therebetween, and cover portions disposed on both surfaces of the capacitance formation portion opposing each other in the first direction,
wherein the first and second external electrodes are disposed on the second surface, and are not disposed on the first surface, and
wherein the multilayer electronic component further includes a first connection structure penetrating the cover portion and connecting the first internal electrode or the second auxiliary electrode disposed in an outermost region with respect to the first direction to the first external electrode, and a second connection structure penetrating the cover portion and connecting the second internal electrode or the first auxiliary electrode disposed in an outermost region with respect to the first direction to the second external electrode.

15. The multilayer electronic component of claim 9,
wherein the body includes a capacitance formation portion in which the first and second internal electrodes are alternately disposed with the first dielectric layer or the second dielectric layer therebetween, and cover portions disposed on both surfaces of the capacitance formation portion opposing each other in the first direction,
wherein the first and second external electrodes are disposed on the first surface and the second surface, respectively,
wherein the first and second external electrodes disposed on the first surface are spaced apart from the first and second external electrodes disposed on the second surface,
wherein the multilayer electronic component further includes a first connection structure penetrating the cover portion and connecting the first internal electrode or the second auxiliary electrode disposed in an outermost region with respect to the first direction to the first external electrode, and a second connection structure penetrating the cover portion and connecting the second internal electrode or the first auxiliary electrode disposed in an outermost region with respect to the first direction to the second external electrode.
